(19) Europäisches Patentamt
European Patent Office
Office européen des brevets

(11) **EP 4 340 306 A1**

(12) **EUROPEAN PATENT APPLICATION**

(43) Date of publication:
**20.03.2024 Bulletin 2024/12**

(21) Application number: **22306368.6**

(22) Date of filing: **16.09.2022**

(51) International Patent Classification (IPC):
**H04L 27/00** (2006.01)    **H04L 27/02** (2006.01)
**H04L 27/26** (2006.01)    **H04W 52/02** (2009.01)

(52) Cooperative Patent Classification (CPC):
**H04L 27/2602; H04L 27/0008; H04L 27/02;
H04W 52/0219; H04W 52/0229; H04W 52/028;
H04W 76/00; H04W 76/28**

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**
Designated Extension States:
**BA ME**
Designated Validation States:
**KH MA MD TN**

(71) Applicant: **Eurecom
06410 Biot (FR)**

(72) Inventors:
• **WAGNER, Sebastian
06410 BIOT (FR)**
• **KNOPP, Raymond
06410 BIOT (FR)**

(74) Representative: **Atout PI Laplace
Immeuble "Visium"
22, avenue Aristide Briand
94117 Arcueil Cedex (FR)**

(54) **A WIRELESS DEVICE AND METHOD FOR ENCODING AND TRANSMITTING A WAKE-UP SIGNAL**

(57)    There is provided a wireless device comprising a transmitter (4) for transmitting a Wake-Up Signal (WUS) message $m = 0,1, ..., 2^B - 1$ in a communication system (100), the transmitter (4) comprising :
- a splitter (400) to split the input message $m$ into $B_v$ bits and $B_h$ bits;
- A vertical encoder (402) to encode the $B_v$ bits into encoded bits c comprising elements $c_i$;
- a Multi-Carrier On-Off Keying (MC-OOK) modulator (42) to apply a MC-OOK modulation to the encoded bits c, which provides MC-OOK modulated signals $s_{l,m_v}$ for the message $m$,
- a horizontal encoder (404) to encode the $B_h$ bits into an horizontal codeword

- a combiner (14) to combine the MC-OOK modulated signals $s_{l,m_v}$ with the horizontal codewords $w_{l,m_h}$,
- a Discrete Fourier Transform (DFT) precoder (44) applying DFT-precoding to the combined sequence $s_{l,m}$,
- a single or multicarrier modulator (46) applying single or multicarrier modulation to the resulting signal $S_m$ output by the DFT-precoder (44),
the MC-OOK modulator (42) mapping a ON-signal $a$ comprising $K_B$ elements to each element $s_{l,m_v}$ of the MC-OOK modulated signal $s_m$ whenever the corresponding encoded input bit $c_i$ is equal to one, and a value zero otherwise.

$$W_{m_h} = [W_{1,m_h}, W_{2,m_h}, ..., W_{L,m_h}],$$

**FIGURE 10**

**Description**

**TECHNICAL FIELD**

The disclosure generally relates to digital communications and in particular to device and a method for generating waveforms and modulation schemes enabling low power receivers.

**BACKGROUND**

Many technical challenges have arisen to enable the transition of Mobile communication systems from the 4th generation (4G) mobile communication system to the future 5th generation (5G) mobile communication systems and beyond generations. In particular, 5G New Radio (5G NR) technology is being standardized to provide rich, reliable and hyper-connected communications.

A communications system forms a network comprising base stations providing radio coverage over a geographical area forming a cell. The cells serve User Equipments (UE) through the base stations. A User equipment can communicate using base stations. A user equipment transmit data over an air or radio interface to the base stations in uplink (UL) transmissions and radio base stations transmit data over an air or radio interface to the user equipments in downlink (DL) transmissions.

Existing mobile communication systems use multiple-access technologies to support communication with multiple users by sharing available system resources.

A UE and a base station may communicate through the communication network, via the radio channel using the RRC control mechanism. RRC enables the UE and the base station to exchange information. In 5G NR, the RRC defines three states: a RRC Idle state (RRC_IDLE state), a RRC connected state (RRC_CONNECTED state), and a RRC inactive state (RRC_INACTIVE state).

Wake-up signals (WUS) are used in mobile communication systems to enable saving power for the User Equipements UEs.

Wake-up signals (WUS) have been part of 3GPP since LTE-M/NB-IoT as well as NR Rel-17 with the main goal of power saving for the UEs. Low-Power (LP) Wake-up Radio (WUR) is being studied in 3GPP Rel-18 (vivo, "New SID: Study on low-power Wake-up Signal and Receiver in NR," RP-213645, 2021).

A User Equipment has to monitor regularly for paging messages in case of incoming traffic or configuration updates.

The paging message is used to inform a UE in RRC_IDLE and in RRC_CONNECTED about a system information change. If the UE receives a paging message indicating a system information modification, the UE by default expects that the system information will change at the next modification period time.

A paging message is indicated via a Downlink Control Information (DCI) message carried in the Physical Downlink Control Channel or via a Reference Signal.

When a UE is in the idle mode, it disconnects itself from the base station. When a base station broadcasts a paging message within the user's tracking area consisting of several cells, the paging message comprises a set of temporary UE IDs if the base station pages several users at a time.

The monitoring of the paging messages at the UE requires the UE to wake up from deep sleep, do time-frequency synchronization and decode the paging DCI as well as the associated paging message. If the paging message contains the UE ID, then the UE moves into RRC_CONNECTED state via completing the RACH procedure. Otherwise it goes back to sleep. This procedure is quite power consuming and a lot of power is wasted if the UE is not paged.

A wake-up signal is designed to only wake up UEs that are actually going to be paged, or at least minimize the number of UEs that are falsely paged.

Designs of Wake-up signals WUS have been proposed for LTE-M and NB-IoT networks. An exemplary WUS design for LTE-M consists of a length-132 Zadoff-Chu sequences, which spans 11 OFDM (Orthogonal Frequency Division Modulation) symbols and 4 PRB (Physical Resource Block). The sequence is then repeated on a second, adjacent PRB and the resulting 2 PRBs/11 symbols are repeated in time based on the configuration of the MPDCCH:

Such WUS is transmitted on a WUS resource of which up to 4 can be configured.

A UE has to monitor only one WUS resource. Each WUS resource can signal up to 8 groups. A UE must monitor two WUS, one common WUS and one group-specific WUS. The group-specific and common WUS are obtained through cyclic shifts of the Zadoff-Chu sequence and depends on the Cell ID, time offset to the associated paging occasion (PO) and the WUS resource ID.

The WUS in Rel-17, also referred to as Paging-Early Indication (PEI) is DCI-based and not sequence-based as in LTE-M. The main advantage of a DCI-based WUS is the increased payload capacity with the draw-back of increased receiver complexity and power-consumption for decoding. However, there is a trade-off between the WUS capacity and the decoding power-consumption since a higher capacity allows signaling of more UE groups which reduces the number of UEs that are falsely paged.

For example, there can be 4 paging frames within one DRX cycle:
The PEI is transmitted before the associated paging frames and consists of S consecutive PDCCH monitoring occasions (MO). The PDCCH for PEI carries DCI Format 2_7 which contains the PI Field. One PEI can indicate up to 8 groups for up to 8 paging occasions via a bitmap allowing for independent signaling of the groups.

A Low-Power (LP)-WUS design has been proposed in IEEE 802.1BSa. In contrast to the WUS design for LTE-M and NR Rel-17, the Low-Power (LP) WUS, also called Wake-Up Radio (WUR), is designed to enable very low-power receivers that operate independently from the Primary Communication Radio (PCR). The Wake-Up Radio (WUR) does not receive or transmit any data but is used to transmit management information only from the base-station (BS) to the UE, such as wake-up notifications. Hence, there is no ACK/NACK feedback nor a WUS transmitter.

According to the conventional WUR PPDU Format, after the legacy training signals, the WUR transmission consists of a WUS-Sync sequence and a WUR-Data part. The WUR-Sync sequence is used to synchronize the WUR frame and to signal the data rate of the subsequent WUR-Data transmission. Since the sequence is known to the UE, it can also be used for channel estimation purposes. The WUR-Data part carries the payload from the MAC with a data rate of either 62.5 kb/s, low data rate (LDR), or 250 kb/s, high data rate (HDR).

The MAC payload consists of a MAC Header, an optional Frame Body and Frame Check Sequence (FCS). The MAC header comprises a Frame Ctrl part, a ID part and a TDC part. The Frame Ctrl part of the MAC Header signal the type of frame, if a frame body is present and if so the Frame Ctrl part signals the length of the frame body. The ID part of the MAC Header can indicate either the WUR ID of a specific device, a WUR group ID if the frame is intended for a group of devices or the transmitter ID if the frame is a broadcast frame. In case of a group-cast transmission, individual WUR IDs of devices in the group can be signaled in the frame body, which enables the WUR frame to target specific devise within the group.

On the physical layer, WUR signals are modulated with multi-carrier (MC) On-Off Keying (OOK). The payload of the WUR-Data part is encoded with a Manchester Code prior to modulation according to an encoding and modulation procedure.
MC-OOK design for LP-WUS enables very low-power receivers as well as its simple integration into the OFDM transmit chain.

However, if only a single bit is transmitted per OFDM symbol, the transmission duration is either very long or the payload has to be very small. Both options are undesirable since a long transmission blocks the resources over a significant duration and reduces the ability of the base station to allocate resources in a flexible manner. On the other hand, small payloads do not allow transmitting important information, like UE identification, which in the application of wake-up signals prevent the ability to target specific UEs.

In particular, when applying MC-OOK to NR, variable sub-carrier spacing (SCS) causes limitations. Indeed, in IEEE 802.11, with an SCS of 312.5 kHz the OFDM symbol duration is quite short, e.g. $2\mu s$ for HDR. NR has flexible SCS with 15, 30, 4, 120, 240 kHz resulting in potentially much longer OFDM symbol durations. A WUS transmission based on MC-OOK therefore might result in very long transmissions, which is not resource efficient.

There is accordingly a need for improved modulations/waveforms designs that allow transmit multiple bits per OFDM symbol while enabling low-power receivers.

## Summary

To address these and other problems, There is provided a wireless device in a communication system, the wireless device comprising a transmitter configured to transmit a Wake-Up Signal (WUS) message m = 0,1,...,$2^B$ - 1 from an input bit vector $b = [b_0, b_1,...,b_{B-1}]$ comprising $B$ bits $b_i$ through a communication channel in the communication system using single or multi-carrier modulation. The transmitter comprises a set of transmit antennas and :

- a splitter configured to split the input message m into a first component $b_v = [b_{v0}, b_{v1}, ..., b_{vB_v}-1]$ comprising $B_v$ bits and corresponding to a message $m_v \in [0,1, ..., 2^{B_v} - 1]$ and a second component $b_h = [b_{h0}, b_{h1}, ..., b_{hB_h}-1]$ comprising $B_h$ bits and corresponding to a message $m_h \in [0,1, ..., 2^{B_h} - 1]$ such that $B = B_h + B_v$, using a set of splitting parameters;
- A vertical encoder configured to encode the $B_v$ bits, which provides encoded bits c;
- a Multi-Carrier On-Off Keying (MC-OOK) modulator configured to apply a MC-OOK modulation to the encoded bits c, which provides MC-OOK modulated signals $s_{m_v}$ for the message m, the encoded bits c comprising elements $c_i$,
- A horizontal encoder configured to encode the $B_h$ bits, which provides an horizontal codeword $w_{m_h} = [w_{1,m_h}, w_{2,m_h},..., w_{L,m_h}]$ where $w_{l,m_h}$ is a complex symbol and $L$ is the number of modulation symbols over which the horizontal code is applied,
- a combiner configured to combine the MC-OOK modulated signals $s_{m_v}$ with the horizontal codeword $w_{m_h}$, which provides a combined code sequence.

The transmitter further comprises:

- a Discrete Fourier Transform (DFT) precoder configured to apply DFT-precoding to the combined sequence $s_{l,m}$, which provides a resulting signal $S_m$;
- a single or multicarrier modulator configured to apply single or multicarrier modulation to the resulting signal $S_m$ output by the DFT-precoder.

The transmitter being configured to transmit a WUS message derived from the signal $x_i(t)$ determined by the single or multicarrier modulator using one or more transmit antennas. The MC-OOK modulator is configured to map a ON-signal $a$ comprising $K_B$ elements such as $a = [a_0, a_1, ..., a_{K_B-1}]$ to each element $s_{l,m_v}$ of the MC-OOK modulated signal $s_m$ whenever the corresponding input bit $c_i$ is equal to one, and a value zero otherwise.

In some aspects, the combiner may be configured to perform the combination by computing the product of the signal $s_{l,m_v}$ generated by the MC-OOK modulator and of the horizontal codeword $w_{m_h}$ according to:

$$s_{l,m} = s_{l,m_v} \cdot w_{l,m_h}.$$

In some embodiments, the vertical encoder may comprise:

- an elementary splitter configured to split the vertical bits $b_v$ into $b_{v0}$ bits and $b_{v1}$ bits such that $b_v = b_{v0} + b_{v1}$, the $b_{v0}$ bits correspond to a message $m_{v0}$ and the $b_{v1}$ bits correspond to a message $m_{v1}$,

- an elementary encoder configured to encode the $b_{v0}$ bits via different sequences, which provides $c_{l,m_{vo}}$ encoded sequences,

- a Sequence computation unit configured to compute a sequence $s_{m_{v1}}$ from the $b_{v1}$ bits and a predefined sequence,

- an elementary combiner configured to combine the encoded bits $c_{l,mvo}$ determined by the elementary encoder with the sequence $s_{m_{v1}}$ determined by the Sequence computation unit to map them to a transmit sequence $s_{l,m_{v1}}$.

The ON-signal correspond to the the sequence $s_{m_{v1}}$ computed by the Sequence computation unit.

The encoded sequence $c_{l,m_{v0}}$ determined by the elementary encoder from the $b_{v0}$ bits may be defined as $c_{l,m_{v0}} = [c_{l,m_{v0}}, c_{l,m_{v0}}, ..., c_{l,m_{v0}}(N - 1)]$ and may depend on a modulation symbol $l$ if different coded bits are transmitted.

In some aspects, the single or multi-carrier modulation may use $K_B$ sub-carriers and a number $K_C$ of resources per encoding, and the length of the sequence $s_{m_{v1}}$ provided by the sequence computation unit may be

$$K_{ON} = L K_B \left\lfloor \frac{K}{K_C} \right\rfloor \quad \text{resource elements.}$$

In some embodiments, the vertical encoder may further comprise a sub-carrier offset unit configured to apply a sub-carrier offset per modulation symbol to the sequence $s_{l,m_{v1}}$, which provides an output sequence $s_{l,m_v}$.

The output sequence $s_{l,m_v}$ may be determined by mapping $K_B$ consecutive elements of the sequence $s_{m_{v1}}$ to every position $k$ when the corresponding encoded bit $c_{l,m_{v0}}$ is equal to one:

$$s_{l,m_v}(k) = s_{m_{v1}}(n) \; \text{if} \; c_{l,m_{v0}}(\bar{k}) = 1,$$

and

$$s_{l,m}(k) = 0,$$

otherwise,

$$\bar{k} = \left\lfloor \frac{k}{K_B} \right\rfloor$$

with , $k = 0,1,2, ..., K - 1$, $l = 1,2, ..., L$ and $n = 0,1,2, ..., K_{ON} - 1$.

The sequence computation unit may be configured to generate the sequence $s_{m_{v1}}$ as a cyclically shifted Zadoff-Chu sequence $x_u(n)$ of length $N_{ZC}$, the Zadoff-Chu sequence $x_u(n)$ being defined by:

$$x_u(n) = e^{-j\frac{\pi u n(n+1)}{N_{ZC}}}$$

with $u = 1,2, ...,N_{ZC} - 1$ and $n = 0,1, ...,N_{ZC} - 1$.

In some embodiments, the sequence $s_{m_{v1}}$ for different messages m may be determined by applying different cyclic shifts $C_m$ to the Zadoff-Chu sequence $x_u(n)$ according to:

$$s_{m_{v1}}(t) = x_u\big((t + C_m) \bmod N_{ZC}\big)$$

with $t = 0,1, ...,K_{ON} - 1$ and $C_m = 0,1, ...,N_{ZC} - 1$.

Alternatively, the sequence computation unit may be configured to generate the sequence $s_{m_{v1}}$ as a modulated Gold-sequence or a modulated m-sequence.

In some aspects, the horizontal encoder may be configured to map the selected $B_h$ bits into a horizontal code W comprising $L$ complex numbers from a given alphabet.

The horizontal encoder may be configured to use an orthogonal or non-orthogonal horizontal code W depending on the number of modulation symbols.

In some embodiments, if the number of bits $B_h$ of the horizontal component is inferior or equal to $\log_2 L$, then an orthogonal encoding scheme may be used to generate the horizontal code $W$, and if the number of bits $B_h$ of the horizontal component is strictly superior to $\log_2 L$, a non-coherent linear code is used to generate the codewords $w_{m_h}$.

The horizontal code $W$ may be chosen as a codeword from a $(L, B_h)$ linear error correcting code, having a length $L$ and a rank $(B_h)$, the linear error correcting code being represented by a generator matrix $G(B_h, L)$ given in a systematic form:

$$G(B_h, L) = (I_{B_h} \quad G_{B_h \times (L-B_h)}),$$

$I_{B_h}$ designating the identity matrix of dimensions $B_h \times B_h$, and $G^{Bh} \times (L-B_h)$ designating a rectangular matrix comprising $B_h$ lines or row vectors and $L - B_h$ columns or column vectors.

The horizontal encoder may comprise:

- a message mapper configured to map the message $m_h$ comprising the $B_h$ bits to a base and deliver a sequence d, the sequence d being defined as d = $[d_0, d_1, ..., d_{Q-1}]$,

- a linear error correcting encoder configured to encode the sequence d = $[d_0, d_1, ..., d_{Q-1}]$ using a generator matrix G as $c = dG$, where c represents an encoded sequence, and

- an elementary modulator configured to modulate the encoded sequence c to determine the horizontal codeword $w_{m_h}$.

There is further provided a receiver configured to receive and decode a WUS message sent by a transmitting wireless device according to any preceding features. The receiver may comprise an envelope detector configured to perform envelope detection from a signal r(t) derived from the WUS signal received from the transmitter, the signal r(t) being a base-band signal r(t) determined from the WUS signal, the envelope detector being configured to use the received energy corresponding to each candidate signal for detection and determination of an estimate $\hat{m}$ of the received WUS message.

The vertical messages $m_{v0}$, $m_{v1}$ and the horizontal code message $m_h$ may be detected separately.

The receiver may comprise an elementary envelope detector configured to first decode the message $m_{v0}$ to determine an estimate hypothesis $\hat{m}_{v0}$, of the message $m_{v0}$, the receiver further comprises a sequence detector configured to then detect the message $m_{v1}$ under different estimate hypotheses $\hat{m}_{v0}$ on message $m_{v0}$, by correlating with possible sequences $s_{m_{v1}}$ computed by the sequence computation unit, the sequence detector being configured to determine an estimated message $\hat{m}_{v1}$ corresponding to an estimate of message $m_{v1}$ under the different estimate hypotheses $\hat{m}_{v0}$ on message $m_{v0}$, the receiver comprising a horizontal code detector configured to detect the horizontal code message $m_h$ by determining an estimate $\hat{m}_h$ of the horizontal code message $m_h$ under estimate hypotheses on message $m_h$ given the hypotheses $\hat{m}_{v0}$ and $\hat{m}_{v1}$ on messages $m_{v0}$ and $m_{v1}$.

In some embodiments, the receiver may be configured to determine an estimate $\hat{m}$ of the message m according to:

$$\hat{m} = \hat{m}_{v0} + \hat{m}_{v1}2^{Bv0} + \hat{m}_h 2^{Bv0+Bv1}.$$

The WUS message may carry one or more message types among:

- a Wake-up Message transmitted to wake up one or multiple other wireless devices in the communication systems;

- A WUS Control Message signaling a change in Wake Up Signal control configuration;

- A WUS Small Data Message transmitting a small payload,

the vertical bits and the horizontal bits being configured to carry different message types.

There is further provided a method of transmitting a Wake-Up Signal (WUS) message m = 0,1, ..., $2^B$ - 1 from an input bit vector b comprising $B$ input bits $b_i$, the method being implemented in a wireless devices in a communication system, the WUS message being transmitted to one or more wireless devices in the communication system through a communication channel using single or multi-carrier modulation. The method comprises :

- splitting the input message m into a first component $b_v = [b_{v0}, b_{v1}, ..., b_{vB_v-1}]$ comprising $B_v$ bits and corresponding to a message $m_v \in [0,1, ...,2^{B_v}$ - 1] and a second component $b_h = [b_{h0}, b_{h1}, ..., b_{hBh-1}]$ comprising $B_h$ bits and corresponding to a message $m_h \in [0,1, ..., 2^{B_h}$ - 1] such that $B = B_h + B_v$, using a set of splitting parameters;

- performing vertical encoding of the $B_v$ bits, which provides encoded bits c;

- applying MC-OOK modulation to the encoded bits c, which provides MC-OOK modulated signals $s_{m_v}$ for the message m, the encoded bits c comprising elements $c_i$,

- performing horizontal encoding of the $B_h$ bits, which provides an horizontal codeword $w_{m_h} = [w_{1,mh}, w_{2,mh}, ..., w_{L,mh}]$ where $w_{l,m_h}$ is a complex symbol and $L$ is the number of modulation symbols over which the horizontal code is applied,

- combining the MC-OOK modulated signals $s_{m_v}$ with the horizontal codeword $w_{m_h}$, which provides a combined code sequence.

The method further comprises:

- applying Discrete Fourier Transform (DFT) precoding to the combined sequence $s_{l,m}$, which provides a resulting signal $S_m$;
- applying single or multicarrier modulation to the resulting signal $S_m$ output by the DFT-precoding step.

The method comprises transmitting a WUS message derived from the signal $x_l(t)$ determined by the single or multicarrier modulator using one or more transmit antennas. The MC-OOK modulation step comprises mapping a ON-signal $a$ comprising $K_B$ elements such as $a = [a_0, a_1, ..., a_{KB-1}]$ to each element $s_{l,m_v}$ of the MC-OOK modulated signal $s_m$ whenever the corresponding input bit $c_i$ is equal to one, and a value zero otherwise.

The embodiments of the disclosure enable extending multi-carrier OOK by transmitting multiple bits per symbol. More precisely, they provide DFT precoding to maintain the properties of the OOK signal and hence enable a low-power receiver implementation.

Compared to the conventional MC-OOK modulation, the DFT-precoded MC-OOK according to the embodiments of the disclosure allows transmitting multiple bits per symbol while still enabling a low-complexity receiver. Hence, spectral efficiency is increased.

Further, the embodiments of the disclosure can exploit the larger number of SCs in NR to transmit multiple bits per OFDM symbol while still allowing for a low-power energy detection receivers.

**Brief description of the drawings**

The accompanying drawings, which are incorporated in and constitute a part of this specification, illustrate various embodiments of the disclosure together with the general description of the disclosure given above, and the detailed description of the embodiments given below.

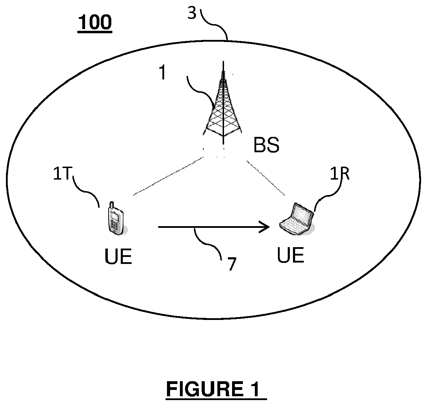

Referring to Figure 1, there is shown an exemplary communication system in which embodiments of the present disclosure may be implemented.

Figure 2 depicts a functional block diagram of a wireless device 1 that may be employed within the wireless communication system of Figure 1.

Figure 3 is a functional diagram of a transmitter configured to generate and transmit a WUS message, according to some embodiments.

Figure 4 depicts the generation of a DFT-precoded MC-OOK, according to an exemplary implementation.

Figure 5A is a diagram block depicting main steps performed by the wireless device to generate a DFT MC-OOK signal, in an embodiment using an encoder.

Figure 5B is diagram block depicting main steps performed by the wireless device to generate a DFT MC-OOK signal, in an embodiment using encoding and repetition with cyclic shifting.

Figure 6 is a block-diagram of an envelope detector according to embodiments where an encoder is used at the transmitter.

Figure 7 is a block diagram representing the envelope detector, according to some embodiments.

Figure 8 is a diagram representing the BLER (Block Error Rate) performance of the envelope detector in an exemplary implementation of the disclosure using AWGN.

Figure 9 is a diagram representing the BLER (Block Error Rate) performance of the envelope detector according to another exemplary implementation of the disclosure using AWGN.

Figure 10 depicts the transmission chain in which the encoder is implemented to overlay an outer code sequence based on a split of the b input bits into vertical bits and horizontal bits.

Figure 11 is a block diagram representing the vertical encoder, according to some embodiments.

Figure 12 is a diagram representing two different exemplary WUS resource allocation configurations.

Figure 13 is a diagram depicting the horizontal encoder, according to some embodiments.

Figure 14 depicts a signal detector, according to some embodiments.

Figure 15 is a flowchart depicting a method for generating and transmitting a WUS message as a DFTprecoded MC OOK signal.

Figure 16 is a flowchart depicting a receiving method for decoding a WUS message received from a transmitter as a DFT predecoded MC OOK signal.

Figure 17 is a flowchart depicting the envelope detection step according to some embodiments.

Figure 18 depicts a method for generating and transmitting a WUS message as a DFTprecoded MC OOK signal.

Figure 19 depicts a receiving method for decoding a WUS message received from a transmitter as a DFTprecoded MC OOK signal.

**Detailed description**

Referring to Figure 1, there is shown an exemplary communication system 100 in which embodiments of the present disclosure may be implemented.

The communication system 100 comprises a mobile communication network 3, one or more wireless devices 1 that include user terminals UE (also referred to as User Equipments UEs, according to 3GPP standard), and one or more base stations BS (also referred to as a Node, designated by a derivative of the term 'NodeB' such as gNodeB node or gNB in 5G NR). A user equipment UE may act as a transmitter device (or 'transmitter') configured to send data to one or more other user devices 1 acting as receiver devices (or 'receivers') through the communication system 100. The base station BS is associated with a cell defining a geographical cell area. The cell associated with the base station BS is served by the base station. Numeral reference 1 will be generally used to refer to a wireless device that can be a user equipment UE or a base station BS.

The communication system 100 may be for example a wireless communication system such as a new radio (NR), a 5G and beyond 5G network.

Although reference will be mainly made to 3GPP network in the following description, the skilled person will readily understand that the embodiments of the disclosure also apply to similar or equivalent networks, such as a successor of the 3GPP network. In the following description, enclosed drawings and appended claims, the use of the term 3GPP and terms related to the 3GPP network should be interpreted accordingly. Similarly, although reference will be made to 5G NR, for illustration purpose, such reference should be interpreted as encompassing any future xG network (6G and beyond) having similar functional components.

A wireless device 1 may be fixed or mobile and/or may be remotely monitored and/or controlled. A wireless device 1 may be equipped with power sources that provide power to the different components ensuring the UE operation.

A user equipment UE may be, without limitation, a mobile phone, a computer, a laptop, a tablet, a drone, an IoT device, etc.

The communication network 3 may be any wireless network enabling IoT. Exemplary wireless networks comprise low-power short range networks and LPWANs.

Further, the communication network 3 may accommodate several pairs of user equipments UE. In such embodiments, multiple access techniques and/or network coding techniques may be used in combination with error correction codes and modulation. Exemplary multiple access techniques comprise without limitation Time Division Multiple Access (TDMA), Frequency Division Multiple Access (FDMA), Code Division Multiple Access (CDMA), and Space Division Multiple Access (SDMA), and Non-Orthogonal Multiple Access (NOMA) technology.

A wireless device 1 (user equipment UE or base station BS) may be equipped with a plurality of transmit and/or receive antennas, and may implement space-time coding and/or space-time decoding techniques which may be used in combination with coded modulations for encoding data both in the time and space dimensions.

A wireless device 1 may be implemented or used as a transmitting node, in which case it is configured to generate and transmit a data packet to one or more wireless devices. Alternatively, the wireless device 1 may be implemented or used as a receiving device (or receiver), in which case it is configured to receive and process a data packet.

A wireless device 1 implemented or used as a receiving device will be denoted 1T hereinafter. Similarly, a wireless device 1 implemented or used as a receiving device will be denoted 1R hereinafter.

A wireless device 1 may comprise a transmitter 4 (also referred to hereinafter as a "transmitter") configured to transmit a plurality of information symbols to at least another wireless device 1R (operating as a receiver) of the communication system 100 through a transmission channel 7.

The wireless device 1 may further comprise a receiver 5 comprising a main receiver 50 configured to receive the signal transmitted by another transmitter 1T of the communication system (such as a base station BS or another user equipment UE) and decode the received signal to recover the original data.

The communication channel 7 may be any communication channel adapted to transmit information symbols from the transmitter 4 to another wireless device 1R in the communication system 100, depending on the type of the communication system, such as for example a wireless medium. The communication channel 7 may be any wireless propagation medium adapted to such devices.

The communication channel 7 may accommodate several pairs of wireless devices 1. In such embodiments, multiple access techniques and/or network coding techniques may be used in combination with error correction codes and modulation. Exemplary multiple access techniques comprise Time Division Multiple Access (TDMA), Frequency Division Multiple Access (FDMA), Code Division Multiple Access (CDMA), and Space Division Multiple Access (SDMA). The communication channel 7 may be a multipath channel using single-carrier or multi-carrier modulation formats such as OFDM (Orthogonal Frequency Division Multiplexing) for mitigating frequency-selectivity, interference and delays.

The communication channel 7 may be a noisy channel. For example, the noise may result from the thermal noise of the system components and/or the intercepted interfering radiation by antennas. The total noise may be modeled by an additive white Gaussian noise (AWGN).

In an application of the disclosure to wireless communication systems such as ad-hoc wireless networks used in local area communications, wireless sensor networks and radio communication systems (e.g. LTE, LTE-advanced, 5G and beyond), the wireless device 1 may be any type of fixed or mobile wireless device configured to operate in a wireless environment.

The communication channel 7 may represent any wireless network enabling IoT. Exemplary wireless networks comprise low-power short range networks and LPWANs. Exemplary LPWAN technologies comprise LTE-NB1 and NB-IoT.

A wireless device 1T operating in transmission mode may be configured to transmit a WUS (Wake Up Signal) message to another wireless device 1R of the communication system 100 that is in a power save mode. The receiver 5 of the wireless device 1R receiving the WUS message may use this information to determine when to transition to an awake state or to an idle state.

For example, the receiving wireless device 1 may enter in an idle state, in an awake state for a certain period of time or determine when to be in an awake state based on the received WUS message.

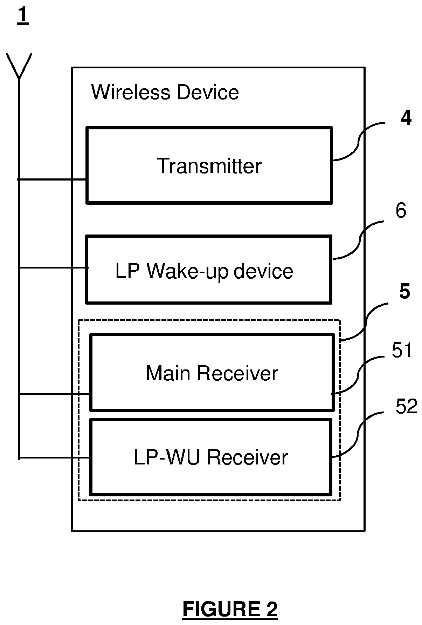

Figure 2 depicts a functional block diagram of a wireless device 1 that may be employed within the wireless communication system 100 of Figure 1 (the wireless device 1 being for example a user equipment UE or a base station BS).

As used herein, the term "wake-up" refers to the operation of a wireless device to enter an operational state (awake state) from an iddle state in order to perform its operational functions (sending and receiving data).

The wireless device 1 may further comprise a Low Power (LP) wake-up (WU) device 6 (referred to hereinafter as a "LP WU device") configured to turn on the wireless device 1 and an auxiliary receiver 52, also referred to as a Low Power Wake-Up (LP WU) receiver referred to hereinafter as a "LP WU receiver"), configured to consume less power than the main receiver 51 during operation to reduce the overall power consumption of the wireless device 1.

The LP WU receiver 52 may be configured to receive signals using modulation/demodulation techniques such as on-off keying.

If the wireless device 1 has nothing to receive or transmit, the wireless device 1 may go to deep sleep, shut off the main radio 51 and turn on the LP-WU receiver 52. When the LP-WU receiver 52 detects a WUS, the wireless device 1 is configured to turn on the main receiver 51, while the LP-WU receiver 52 may be turned off or kept ON if the WUS is also supported in RRC_CONNECTED mode.

To enable transmission of a WUS from a transmitting wireless device 1T to a receiving wireless device 1R, the transmitter 4 of the transmitting wireless device 1T is configured to apply processing steps to generate the WUS which include modulating WUR with multi-carrier (MC) On-Off Keying (OOK).

The embodiments of the disclosure enable to extend multi-carrier OOK by transmitting multiple bits per symbol while still enabling a low-complexity receiver, and increasing spectral efficiency. In particular, in an application of the invention to NR

In some aspects, there is provided a wireless device 1 comprising a transmitter 4 configured to transmit a Wake-Up Signal (WUS) message m such that m = 0,1,...,$2^B$ - 1 from input bits $b = [b_0, b_1, ..., b_{B-1}]$ comprising $B$ bits $b_i$ through a communication channel 3 using single or multi-carrier modulation (such as OFDM modulation).

Although reference will be made mainly to a Wake-up message type used to wake up one or multiple other wireless devices 1 in the communication system 100 for illustrating purpose, it should be noted that the invention is not limited to a to wake up message and may carry other types of WUS messages or a combination thereof such a WUS Control Message used to signal a change in Wake Up Signal control configuration, or a WUS Small Data Message transmitting a small payload.

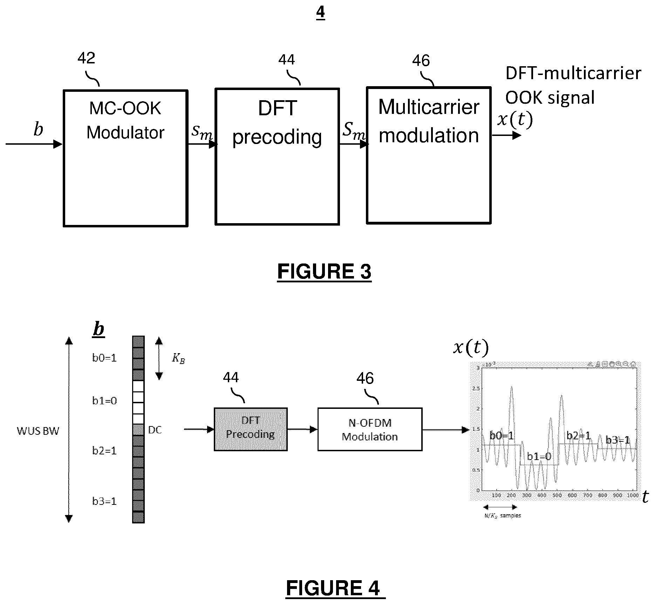

Figure 3 is a functional diagram of a transmitter 4 configured to generate and transmit a WUS message m to one or more other receiving wireless device 1R in the communication system 100, according to some embodiments.

In the following description of some embodiments, it is considered that a narrow-band MC (Multi-Carrier) transmission with $K$ sub-carriers is used, where the received vector of a modulation symbol $l$ on receive antenna $p$ is given by:

$$r_{l,p} = H_{l,p}Fs_{l,m} + n_{l,p} \quad (1)$$

In Equation (1), $s_{l,m}$ denotes the transmit signal for a message m, $H_{l,p} = \mathrm{diag}(h_{l,p,1}, h_{l,p,2}, ..., h_{l,p,K})$, $h_{l,p,k}$ represents the complex channel coefficient on sub-carrier $k$, with $k = 1,2, ..., K$ and F represents a DFT (Discrete Fourier Transform) matrix of size $K$.

The noise vector $n_{l,p} = [n_{l,p,1}, n_{l,p,2}, ..., n_{l,p,K}]$ is assumed to be independent and identically distributed (i.i.d.) complex Gaussian with zero mean and variance $\sigma^2$, i.e. $n_k \sim NC(0, \sigma^2)$.

The transmitter 4 is configured to receive the $b = [b_0, b_1, ..., b_{B-1}]$ input bits corresponding to the message m = 0,1, ..., $2^B$ - 1.

The Transmitter 4 comprises a Multi-Carrier On-Off Keying (MC OOK) modulator 42 configured to apply a MC-OOK modulation to the b input bits, which provides a MC-OOK modulated producing signal $s_m$ per modulation symbol $l$ (such as OFDM symbols).

The Transmitter 4 further comprises a Discrete Fourier Transform (DFT) precoder 44 configured to apply DFT-precoding to the signal $s_m$. The DFT precoder 44 provides a resulting signal $S_m$.

The Transmitter 4 comprises a single or multi-carrier modulator 46 configured to apply single or multi-carrier modulation to the resulting signal $S_m$ output by the DFT-precoder 44. The single or multicarrier modulator 46 is configured to map the resulting signal $S_m$ to the overall system resources by applying the single or multicarrier modulation to the resulting signal $S_m$ over the entire system bandwidth, which provides a time-domain base-band signal $x(t)$.

The single or multi-carrier modulator 46 is configured to convert the signal $S_m$ from the time domain to the frequency domain using a modulation technique and spread the signals thus obtained over the transmission antennas of the transmitter 4.

In an embodiment ,OFDM modulation may be used, the single or multicarrier modulator 46 being an OFDM modulator 46 using a OFDM modulation technique to convert the signal $S_m$ from the time domain to the frequency domain.

The following description of some embodiments of the invention will be made mainly with reference to OFDM modulation using OFDM modulators for illustration purpose only although the invention applies to other types of single-carrier or multi-carrier modulation.

The MC-OOK modulator 42 is configured to provide a MC-OOK modulated signal $s_m$ for a message m = 0,1, ..., $2^B$ - 1 defined by:

$$s_m = [s_0, s_1, ..., s_{B-1}] \ (2)$$

In formula (2), $B$ represents the number of bits transmitted per OFDM symbol $l$ and $s_i = [s_{i0}, s_{i1}, ..., s_{i_{K_B}}-1]$ with $K_B = \lfloor K/B \rfloor$, represents the number of sub-carriers for sequence $s_i$, i = 0,1, ..., B - 1.

The MC-OOK modulator 42 is configured to map an ON-signal a = [$a_0$, $a_1$, ..., $a_{K_B}$-1] to $s_i$ whenever the corresponding bit is one, i.e.:

$$s_i = \begin{cases} 0, & b_i = 0 \\ a, & b_i = 1 \end{cases} \ (3)$$

The ON-signal *a* may be *any complex sequence* and may be different for every $s_i$.

Figure 4 depicts the generation of a DFT-precoded MC-OOK, according to the embodiment of figure 3 applied to exemplary input bits b. In the example of figure 4, OFDM modulation is used, $B = 4$ and the input bits are b = [$b_3$, $b_2$, $b_1$, $b_0$] = [1, 1, 0, 1], m = 13, and $s_{13}$ = [a, a, 0, a].

For instance, the On-signal may be random M-PSK symbols or can be a known sequence.

The DFT-precoder 44 is configured to take the input sequence $s_m$ of length $K$ and perform the DFT operation to produce a signal $S_m = [S_{m0}, S_{m1}, ..., S_{mK-1}]$, with $S_{mn}$ being defined according to Equation (4):

$$S_{mn} = \frac{1}{\sqrt{K}} \sum_{k=0}^{K-1} s_{mk} e^{-j\frac{2\pi k n}{K}} \ (4)$$

In Equation (4), $s_{mk}$ is element $k$ of $s_m$ and n = 0,1, ..., K - 1.

In embodiments using OFDM modulation, in the single or multicarrier modulator 46, the signal $s_m$ is mapped to the overall transmission bandwidth, i.e. the number of sub-carriers W and the resulting signal $S_m = [S_{m0}, S_{m1}, ..., S_{mW-1}]$ is OFDM modulated as $x_m(t)$:

$$x_m(t) = \sum_{k=0}^{W-1} S_{mk} e^{j2\pi k \Delta f(t-N_{CP}T_c)} \ (5\text{-}1)$$

In Equation (5-1), $\Delta f$, $N_{CP}$ and $T_c$ are physical parameters related to the OFDM transmission.

In the mapping to the overall transmission bandwidth, the sub-carrier corresponding to DC subcarrier (DC stands for Direct Current) within the WUS transmission bandwidth can either be used or not used. Using the DC sub-carrier might result in a more complex receiver design to compensate for any DC impairments. If the DC sub-carrier is left unused, the corresponding modulation symbol is set to zero, i.e. $S_m(DC_{index}) = 0$ (for instance $S_m\left(\left\lfloor\frac{K}{2}\right\rfloor+1\right) = 0$ ). The output of the DFT precoder 44 may be then punctured but still be the result of a contiguous DFT transform, which does not significantly impact the receiver performance. Assuming the WUS signal is mapped to indices $n = 0, 1, ..., K - 1$, the mapping may be defined by (5-2):

$$X_m(n) = \begin{cases} S_m(n), & n = 0, 1, ..., \left\lfloor\frac{K}{2}\right\rfloor - 1 \\ 0, & n = \left\lfloor\frac{K}{2}\right\rfloor \\ S_m(n), & n = \left\lfloor\frac{K}{2}\right\rfloor + 1, \left\lfloor\frac{K}{2}\right\rfloor + 2, ..., K - 1 \end{cases} \quad (5\text{-}2)$$

Advantageously, the use of DFT precoding in conjunction with multi-carrier OOK enables increasing the number of bit per modulation symbol (such as OFDM symbol).

The transmitter device is configured to transmit a signal derived from the modulated combined sequence $x_m(t)$ over the transmission channel 7 using the transmit antennas.

The signals may be sent from the $n_t$ transmit antennas optionally after filtering, frequency transposition and/or amplification by at least one power amplifier of the signal $x_i(t)$ at the transmitter 4.

The symbols of the vector $x_m(t)$ may represent samples in both time and frequency. In particular, the frequency dimensions may be adjacent carriers in a multi-carrier symbol (for example an OFDM symbol) and the time dimensions may refer to different multi-carrier symbols. A time or frequency dimension is designated by a Resource Element.

A Resource Element (RE) refers to the smallest defined unit consisting of one modulation sub-carrier during one modulation symbol interval (for example one OFDM sub-carrier during one OFDM symbol interval). Each Resource Block (RB) designates a number of Resource Elements (RE). Resource blocks (RB) are used to map physical channels to resource elements RE.

In some embodiments, the transmitter 4 may further comprise an encoder configured to encode the input bits b using at least one encoding scheme.

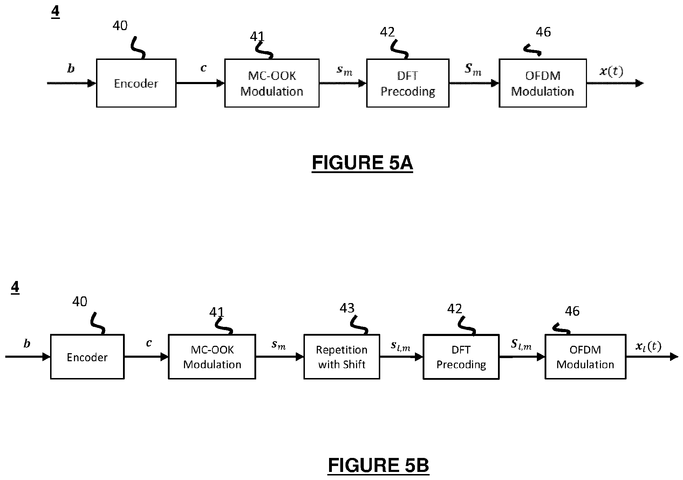

Figure 5A is a diagram block depicting main steps performed by the wireless device 4 to generate a DFT MC-OOK signal, in an embodiment using an encoder 40 to encode per modulation symbol. In such embodiments, the b input bits are encoded by the encoder 40, which provides resulting coded bits c. The encoded bits c comprise $N$ components $c_i$ such that $c = c_0, c_1, ..., c_{N-1}$

Instead of being applied to the b bits, the MC-OOK modulator 42 is then applied to the encoded bits c instead. Therefore, in embodiments using an encoder 40 to encode the b bits, the MC-OOK modulator 42 is configured to map a ON-signal $a = [a_0, a_1, ..., a_{K_B}-1]$ to $s_i$ whenever the corresponding bit is one, i.e.:

$$s_i = \begin{cases} 0, & c_i = 0 \\ a, & c_i = 1 \end{cases} \quad (6)$$

The ON-signal $a$ may be any complex sequence and may be different for every $s_i$.

The encoder 40 may use at least one generator code to encode the b bits.

In one embodiment, the generator code used by the encoder 40 may be a Manchester Code, the encoder 40 applying Manchester coding to encode the b bits. The use of Manchester coding enables increasing the performance.

For example, a rate R = 1/2 Manchester code may be used. The encoder 40 may then apply the rate R = 1/2 Manchester code to map the input bit b to the output bits c as follows:

$$c = \begin{cases} [0, 1], & b = 0 \\ [1, 0], & b = 1 \end{cases} \quad (7)$$

Such mapping avoids long sequences of zeros where nothing is transmitted while enabling encoding of the information in the transition from 0 to 1 or 1 to 0. Therefore, instead of comparing to a threshold, a receiver device 1R receiving the WUS signal message from a transmitter device 1T can compare between the 0- and the 1-part of the transmission and thus avoid complicated threshold determination.

In other embodiments, the R = 1/2 Manchester code can be extended to increase performance of the DFT-precoded MC-OOK signal.

In such embodiments with extended Manchester Code, $K$ input bits b = $b_0$, $b_1$, ..., $b_{K-1}$ are considered and the corresponding coded bits c = $c_0$, $c_1$, ..., $c_{N-1}$ are given by:

$$\bar{c} = 2^m \quad (8)$$

In Equation (8), m = 0,1, ..., $2^K$ - 1 represents the message and $\bar{c}$ represents the decimal representations of codeword c. For example, if $K$ = 2 and $N$ = 4, the coded bits are given in Table 1. Table 1 represents an exemplary encoding table defining a mapping between input bits and coded bits, for K=2 input bits and N=4 coded bits, using a rate R = ½ Manchester code.

Table 1

| Input Bits | Coded Bits |
|---|---|
| 00 | 0001 |
| 01 | 0010 |
| 10 | 0100 |
| 11 | 1000 |

In the example of $K$ = 3 and $N$ = 8, the coded bits are given in Table 2 for the input bits. Table 2 is another exemplary encoding table defining the mapping between input bits b and coded bits c, for K= 3 input bits and N=8 coded bits, using a rate R = 3/8 Manchester code.

Table 2

| Input Bits | Coded Bits |
|---|---|
| 000 | 00000001 |
| 001 | 00000010 |
| 010 | 00000100 |
| 011 | 00001000 |
| 100 | 00010000 |
| 101 | 00100000 |
| 110 | 01000000 |
| 111 | 10000000 |

The rate of the code is given by $R = \dfrac{K}{2^K}$. Hence, increasing $K$ will decrease the code rate.

The advantage of using $K$ = 2 compared to $K$ = 1 is that double the power can be used for $K$ = 2 per codeword because the power has to be divided among 2 codewords in case of $K$ = 1. Moreover, decoding remains simple and does not involve complex threshold detection.

$K$ = 2 might result in a higher peak-to-average power ratio PAPR (PAPR = 3dB in the previous example). However, in conjunction with the DFT-precoded MC-OOK according to the embodiments of the disclosure, the PAPR increase remains minor due to the DFT-precoding performed by the DFT-precoder 44.

In some embodiments, an extended Manchester code may be used by the encoder 4.

It should be noted that the encoder 40 may implement a combination of different encoding schemes and is not limited to the use of only one encoding scheme. Accordingly, in some aspects, considering $T$ disjoint sets $S_j$ $(j = 1\ to\ T)$ of input bits among the b input bits and $T$ different encoding schemes $E_j$ $(j = 1\ to\ T)$, each set $S_j$ of input bits can be encoded using a different encoding scheme $E_j$. For example, 4 input bits among the b bits can be encoded by encoding 2 consecutive bits according to Table 1 or 5 input bits can be encoded according to Table 2 and the remaining 2 bits according to Table 1. Therefore, the encoded bits c can contain more than one non-zero bit.

Although the above embodiments of the disclosure have been described above with reference to the transmit processing for one modulation symbol (e.g. OFDM symbol), the disclosure is not limited to such embodiments and also applies to the transmission over multiple modulation symbols (e.g. multiple OFDM symbols).

To enable transmission over multiple modulation symbols, in one aspect, the transmitter 4 may be configured to repeat the signal $s_m$ over $L_R$ consecutive modulation symbols to increase the SNR at the receiver 5, by cyclically shifting the signal for every OFDM symbol.

Figure 5B is a block diagram of the transmitter 4 in an embodiment using an encoder 40 and a repetition unit 43 configured to perform repetition with cyclic shifting.

To increase diversity, the repetition unit 43 is configured to cyclically shift the signal $s_m$ by $K_{CS} = 0, 1, ..., K - 1$ sub-carriers, the signal $s_{l,m}$, $l = 1, 2, ..., L_R$ being given by:

$$s_{l,m}(k) = s_m(\bar{k}) \quad (9)$$

In equation (9), $\bar{k} = \text{mod}[k + (l - 1)K_{CS}, K]$, $k = 1, 2, ..., K$.

In the case where $L_R = 1$, no repetition is used and every OFDM symbol transmits a different codeword, which increases the data rate while reducing the decoding reliability.

The DFT-precoded MC On-Off Keying WU signal (simply referred to as the 'WU signal" or 'WUS message' hereinafter) sent by the transmitter 4 of a wireless device 1T may be received by one or more wireless devices 1R operating as receivers (for example other user equipment in the communication system 100).

To enable receipt and decoding of the WU signal, the receiver 5 of a wireless device 1 is configured to receive and decode the WU signal (the wireless device 1 then operating as a receiver 1T).

In some embodiments, the LP-WUS receiver 52 may be implemented as an envelope detector configured to perform envelope detection from a signal r(t) derived from the WUS signal received from the transmitter 4 of a transmitting wireless device 1T. Therefore, in the following description of some embodiments and in the drawings, the reference 52 will be used to refer to the envelope detector.

The signal r(t) is a base-band signal determined from the WUS signal by successively applying processing steps to the WUS signal (e.g. conversion to baseband, filtering and sampling).

The Envelope Detector 52 may use the received energy corresponding to each candidate signal for detection and determination of an estimate $\hat{m}$ of the received WUS message.

In one embodiment, the envelope detector 52 is non-coherent and configured to perform non-coherent envelope detection (the receiver 52 is then referred to as a "non-coherent envelope detector) from the signal r(t). As used herein, a non-coherent envelope detector refers to a detection that does not require the phase of the input signal, and only uses the amplitude.

The non-coherent receiver 52 may only have access to the magnitude (or envelope) $|r(t)|$ of the received signal r(t) in time-domain, i.e., the phase is unknown.

It is assumed that the noise is Additive white Gaussian noise (AWGN) and the following base-band system model (10) is considered:

$$r = s_m + n \quad (10)$$

In the case of an On-Off Keying (OOK) WU signal, $s_0 = 0$ and $s_1 = A$.

The envelope $|r|$ has a distribution p(r), that may be defined according to equation (11):

$$p(r) = \frac{2r}{\sigma^2} e^{-\frac{r^2 + A^2}{\sigma^2}} I_0\left(\frac{2rA}{\sigma^2}\right) \quad (11)$$

In Equation (12), $I_0(z)$ denotes the modified Bessel function of the first kind and zero-th order and $\sigma$ refers to the noise power, as defined in J. G. Proakis and S. M., Digital Communications, vol. 4, New York: McGraw-hill, 2001.

The envelope detector 52 is configured to perform a threshold comparison to determine if nothing was transmitted or something was transmitted in the presence of noise.

The optimal threshold b to decide if $s_0$ or $s_1$ was transmitted is given as the solution to Equation (12):

$$e^{-\gamma} I_0\left(b_0\sqrt{2\gamma}\right) = 1 \quad (12)$$

In equation (12), $\gamma$ denotes the SNR (Signal to Noise Ratio), with $\gamma = \dfrac{A^2}{\sigma^2}$ and $b_0 = b\sqrt{2/\sigma^2}$.

Equation (12) can well approximated by formula (13):

$$b = \sigma\sqrt{1 + \frac{\gamma}{4}} \quad (13)$$

Limiting cases correspond to $\lim_{\gamma\to 0} b = \sigma$ and $\lim_{\gamma\to\infty} b = \dfrac{A}{2}$, which means that for high SNR, the envelope detector 52 is the same as the coherent detector.

Accordingly, the non-coherent Envelope Detector 52 may be configured to perform the threshold comparison according to (14) to decide if $s_1$ or $s_0$ has been transmitted:

$$\left.\begin{array}{l} s_1 \text{ if } |r| > b \\ s_0 \text{ otherwise} \end{array}\right\} \quad (14)$$

The detector 52 may be an envelope detector or a quadratic envelope detector configured to decide $s_1$ if the following condition is met:

$$|r|^2 > b^2 = \sigma^2\left(1 + \frac{\gamma}{4}\right) \quad (15)$$

In case of fading channels, the envelope detection may be based on channel statistics to determine optimal threshold levels through simulations, which are subsequently stored in the LP-WUS receiver 52.

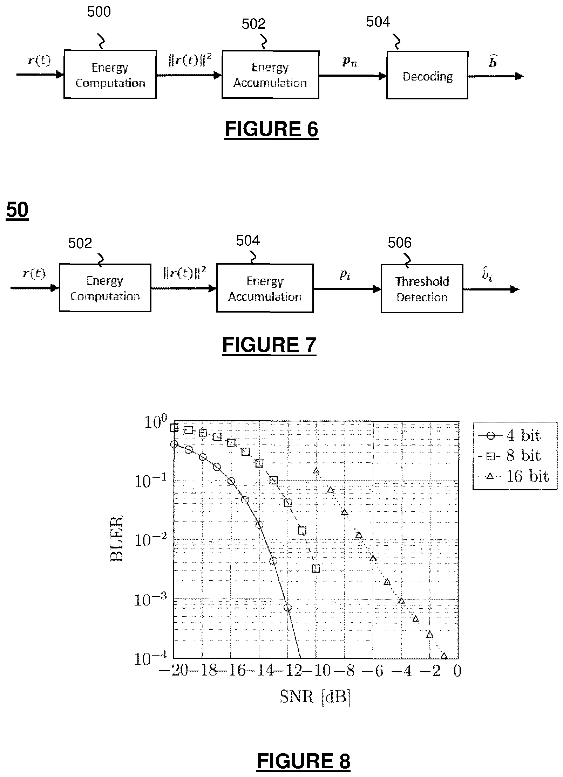

Figure 6 is a block-diagram of an envelope detector 52 according to embodiments where an encoder 40 is used at the transmitter 4.

The envelope detector 52 comprises an energy computation unit 500 configured to receive the base-band signal r(t). The base-band signal r(t) may be determined from the WUS received from the transmitter 4 by applying successively a downconversion, an analog-digital conversion and a filtering of the received WUS. The filtering is applied in the energy computation unit 500 by applying a filter to extract the useful signal and reject the noise outside the signal bandwidth.

The energy accumulation unit 502 is configured to compute an energy parameter $||r(t)||^2$ by squaring the magnitude of samples of the base-band signal $r(t)$.

The energy accumulation unit 502 is configured to then accumulate energy over the $T$ samples of the base-band signal $||r_p(t)||^2$ with t being comprised between ti and ti +T and $p$ being comprised between 1 and $P$ (p designating the $p^{th}$ receive antenna and P designating the number of receive antennas), a sample $u_{in}$ representing one coded bit in a codeword $n$ at offset $t_i$ and being defined by:

$$u_{in} = \sum_{p=1}^{P} \sum_{t=t_i}^{t_i+T} \left\|r_p(t)\right\|^2 \quad (16)$$

The accumulated energy values of each coded bit in codeword $n$ are denoted $u_n$ and defined as $u_n = \{u_{0n}, u_{1n}, ..., u_{N-1n}\}$.

The envelope detector 52 comprises a decoding unit 504 configured to decode the WUS signal received from the transmitter 4.

The decoding unit 504 is configured to determine an estimated input message $\hat{m}_n$ given by:

$$\hat{m}_n = \mathrm{argmax}_{i=0,1,..,N-1}\{u_{in}\} \quad (17)$$

The decoding unit 504 is then configured to transform $\hat{m}_n$ into its binary representation to determine the transmitted bits $\hat{b}$. As used herein, the operator "$\hat{\alpha}$" is used to refer to an estimate of the parameter $\alpha$ (therefore $\hat{b}$ denotes an estimate of the input bits b).

In embodiments where the transmitted does not comprise an encoder 40, the detection unit 504 may be replaced by a threshold detector.

Figure 7 is a block diagram representing the envelope detector 50 in embodiments implemented without an encoder 40 in the transmission chain and in which the detection unit 504 has been replaced by a threshold detector 506, according to some embodiments.

The threshold detector 506 is configured to compare each accumulated energy value $u_i$ of bit i to a threshold $g$, according to formulas (18):

$$b_i = \begin{cases} 0, & \text{if } u_i \leq g \\ 1, & \text{if } u_i > g \end{cases} \quad (18)$$

For example, in embodiments using AWGN, the threshold g may be defined as $g = q^2$ and be normalized to the number of receiver antennas as $q^2/P$.

In the case of coherent detection, the envelope detector 52 may be an optimal MAP detector for the narrowband MIMO model given by equation (1) and configured to determine an estimate of the input message $\hat{m}$. The estimate of the input message $\hat{m}$ may be defined according to equation (19):

$$\hat{m} = \mathrm{argmax}_m \left\{ \frac{\sigma^2}{2} \ln P_m - \frac{1}{2} \left\| r - \hat{H}s_m \right\|^2 \right\} \quad (19)$$

In Equation (19), $P_m$ refers to the probability of message m being transmitted and $\hat{H} = \mathrm{diag}(\hat{h}_1, \hat{h}_2, ..., \hat{h}_K)$ denotes the channel estimate.

Equation (19) can be rewritten as :

$$\hat{m} = \mathrm{argmax}_m \{\eta_m + \Re(s_m^H \bar{r})\} \quad (20)$$

In Equation (20), $\bar{r}$ denotes the matched filter output (filter matched to the channel estimate) defined by $\bar{r} = \hat{H}^H r$ and $\eta_m$ is defined by:

$$\eta_m = \frac{\sigma^2}{2} \ln P_m - \frac{1}{2} \left\| \hat{H}s_m \right\|^2 \quad (21)$$

For equally likely symbols $s_m$, i.e. $P_M = 1/M$, with M designating the number of possible messages with $M = 2^{B-1}$, the estimate of the message determined by the envelope detector 52 is defined by:

$$\hat{m} = \mathrm{argmin}_m \{\left\| r - \hat{H}s_m \right\|\} \quad (22)$$

The detection may use a decision rule such as MAP (Maximum A Posteriori) decision rule to determine the estimated message in a decision region $D_m$.

As disclosed in J. G. Proakis and S. M., Digital Communications, vol. 4, New York: McGraw-hill, 2001, the decision region $D_m$ may be defined by :

$$D_m = \left\{ \bar{r} \in \mathbb{C}^K : \Re(s_m^H \bar{r}) + \eta_m > \Re\left(s_{m'}^H \bar{r}\right) + \eta_{m'}, \forall 1 \le m' \le M, m' \neq m \right\} \quad (23)$$

In case of MC-OOK, the two transmit signals are $s_0 = 0$ and $s_1 = a$, with $a$ corresponding to the ON-signal and 0 to the OFF signal.

It should be noted that the modulation symbols for the ON-signal $a$ are to be known for a coherent receiver 52.

The decision rule that $s_1$ has been transmitted is defined according to inequality (24):

$$\Re(s_1^H \bar{r}) > \eta_1 \quad (24)$$

If condition (24) is verified, this means that $s_1$ has been transmitted. Otherwise, this means that $s_0$ has been transmitted.

In a particular case where $a_k = \dfrac{1}{\sqrt{K}}$, $\forall k$ and $P_M = 1/M$, inequality (24) can be rewritten in the following form:

$$\sum_{k=1}^{K} \Re(\bar{r}_k) > \frac{\|\hat{h}\|^2}{2\sqrt{K}} \quad (25)$$

In inequality (25), $\hat{H} = \mathrm{diag}(\hat{h})$.

If the exemplary implementation of the invention where a rate R = 1/2 Manchester code is used, the transmit messages are given by $s_0 = [0, a^T]^T$ and $s_1 = [a^T, 0]^T$. Considering $\bar{r} = [\bar{r}_1, \bar{r}_2]^T$, where $\bar{r}_1$ and $\bar{r}_2$ are the matched filter outputs (filters matched to the channel estimate) associated with the first and second set of sub-carriers (with $\bar{r}_1 = \hat{H}^H r_1$ and $\bar{r}_2 = \hat{H}^H r_2$), respectively, the decision region $D_1$ is defined as:

$$D_1 = \left\{ \bar{r} \in \mathbb{C}^K : \Re\left(a^H(\bar{r}_1 - \bar{r}_2)\right) > \eta_0 - \eta_1 \right\} \quad (26)$$

Assuming $a_k = \dfrac{1}{\sqrt{K}}$, $\forall k$ and $P_M = 1/M$, equation (26) can be rewritten as:

$$D_1 = \left\{ \bar{r} \in \mathbb{C}^K : \sum_{k=1}^{K} \Re(\bar{r}_{1k}) - \Re(\bar{r}_{2k}) > -\frac{\|\hat{h}_2\|^2 - \|\hat{h}_1\|^2}{2\sqrt{K}} \right\} \quad (27)$$

With the application of DFT-MC-OOK processing at the transmit side, there are $B$ coded bits transmitted per OFDM symbol, i.e. there are M = $2^B$ possible messages $s_m$. The $B$ bits may be decoded jointly using the MAP metric, defined by equation (19).

In some embodiments, the receiver 52 may be configured to perform a coherent reception without access to a channel estimate. In such embodiments, the decoding unit 504 is configured to determine the estimate $\hat{m}$ of the message according to Equation (28):

$$\hat{m} = \mathrm{argmax}_m\{|s_m^H r|^2\} \quad (28)$$

Figure 8 is a diagram representing the BLER (Block Error Rate) performance of the envelope detector 50 in an exemplary implementation of the disclosure using AWGN, 64 sub-carriers, A R=1/2 Manchester code at the transmitter, 4 with K=1, random QPSK symbols, and different numbers of coded bits per OFDM symbols.

As shown in Figure 8, the performance decreases as the number of bits per symbol increases. This is explained by the fact that the envelope detector 50 accumulates less energy per bit due to the reduced accumulation period

$$T = \frac{N}{K} K_B T_S$$
, N = 1024, for $K_B$ = 16, 8,4 and 4,8,16 bits per symbol, respectively.

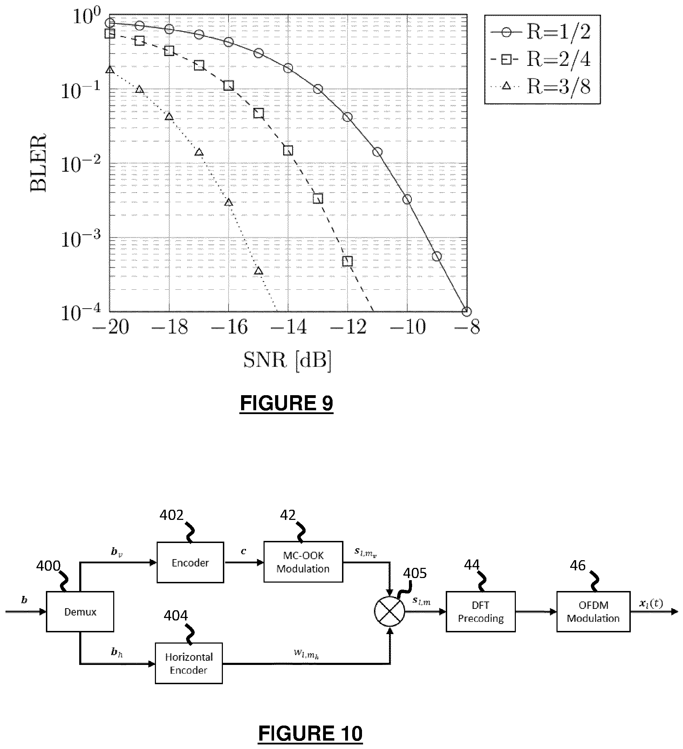

Figure 9 is another diagram representing the performance of the envelope detector 52 according to embodiments of the disclosure, in an implementation of the disclosure using AWGN, 64 sub-carriers, 8 sub-carriers per coded bit, a R=K/N extended code, random QPSK symbols, and 1 OFDM symbol. In figure 10, different coding schemes are compared comprising:

- a first coding scheme using a R=1/2 Manchester Code,
- a second coding scheme using a R=2/4 Manchester Code, and
- a third coding scheme using a R=3/8 Manchester Code.

Figure 9 show that there is a 3dB gain when the number of coded bits is doubled since the power per codeword doubles.

In some embodiment, instead of applying a simple repetition, *L* consecutive modulation symbols (e.g. OFDM symbols) can be overlaid with an outer code sequence, using a splitter to split the b bits into $b_h$ horizontal bits and $b_v$ vertical bits and encoding separately the $b_h$ horizontal bits and $b_v$ vertical bits.

Figure 10 depicts the transmission chain encoding is implemented to overlay an outer code sequence based on a split of the b input bit vector into vertical bits and horizontal bits.

In such embodiment, the transmitter 4 comprises:

- a splitter 400 (also referred to as a 'demultiplexer' or 'demux') configured to split the input bitstream m comprising the $b = [b_0, b_1, ..., b_{B-1}]$ input bits into a first component (also called vertical component) comprising $b_v$ bits with $b_v = [b_{v0}, b_{v1}, ..., b_{v(Bv}-1)]$, corresponding to a message $m_v \in [0,1, ..., 2^{Bv} - 1]$, and a second component (also called "horizontal component") comprising $b_h$ bits with $b_h = [b_{h0}, b_{h1}, ..., b_{h(Bh-1)}]$ and corresponding to a message $m_h \in [0,1, ..., 2^{Bh} - 1]$, using a set of splitting parameters, such that $B = B_v + B_h$; and
- a first encoder 402 (also called "vertical encoder") configured to encode the $B_v$ bits in the vertical domain using a vertical code, which provides encoded bits c, similarly to the encoding process performed by the encoder 40 (the vertical code may be for example a Manchester encoding scheme). The $B_v$ bits correspond to a message $m_v = 0,1, ..., 2^{Bv} - 1$.

The encoded bits c are then transmitted to the MC-OOK modulator 42. The MC-OOK modulator 42 performs the MC-OOK modulation, which provides a signal $s_{l,m_v}$, the signal $s_{l,m_v}$ depending on symbol *l* through different offsets per symbol.

The Transmitter 4 further comprises:

- a second encoder 404 (also called "horizontal encoder") configured to generate a horizontal code of size *L* from the second component of $B_h$ bits and encode the $B_h$ bits on the horizontal domain using encoding strategies, which result in a codeword $w_{mh} = [w_{1,mh}, w_{2,mh}, ..., w_{L,mh}]$ where $w_{l,mh}$ is a complex symbol and *L* is the number of OFDM symbols over which the horizontal code is applied.

- a combiner 405 configured to combine the signal $s_{l,m_v}$ generated by the MC-OOK modulator 42 after encoding by the first encoder 402 and the horizontal code sequence $w_{l,mh}$ generated by the second encoder 404, which provides a combined code sequence $s_{l,m}$, the combination operation being defined as the product of the signal $s_{l,m_v}$ generated by the MC-OOK modulator 42 and the horizontal code sequence $w_{l,mh}$:

$$s_{l,m} = s_{l,m_v} \cdot w_{l,m_h} \quad (29)$$

In another embodiment, the combined sequence $s_{l,m}$ may be determined as the product of the $s_{l,m_v}$, a phasor term, and the horizontal code sequence $w_{l,m_h}$. With the use of the phasor, the combiner 405 performs a phase rotation for adjacent elements in the signal $s_{l,m_v}$. so as to avoid zero-crossings in the complex envelope of the time-domain waveform. In such embodiment, an element $s_{l,m}$ at the output of the combiner 405 may be written as:

$$s_{l,m} = s_{l,m_v} e^{j\beta l mod 2} w_{l,m_h} \quad (30)$$

The parameter $\beta$, also called hereinafter 'rotation parameter', designates a real number (integer or non integer) chosen to minimize peak-to-average power ratio PAPR.

For example, $\beta$ may be equal to $\pi/4$.

The combination of such phase-shifting and the DFT precoding advantageously limits the PAPR at the output of the transmitter device 1.

Subsequently, the DFT-precoding is performed by the DFT-precoder 44 and single or multicarrier modulation (e.g. OFDM) is performed by the single or multicarrier modulator 46. The single or multi-carrier modulation provides modulation symbols grouped into resource blocks, each resource block comprising resource elements.

The set of splitting parameters may comprise user preferences and/or system preferences. The set of splitting parameters may be defined such that the mapping of the input message m to the vertical and horizontal messages $m(m_v, h) \rightarrow \{0, 1, ..., 2^B - 1\}$ is one-to-one so that any pair $(m_v, m_h)$ uniquely determines m and vice-versa. The function $m(m_v, m_h)$ designates a mapping function which maps the input message m to the vertical and horizontal messages $m_v$ and $m_h$.

Advantageously, the size of the vertical code may be equal to the number of resource elements in each of the modulation symbols in time and/or frequency.

The vertical code corresponds to a vertical dimension representing the resource elements and the horizontal code corresponds to a horizontal dimension representing time or modulation symbols.

Advantageously, the vertical dimension corresponding to the vertical code $v_k(m)$ represents the resource elements, while the horizontal dimension corresponding to the horizontal code $v_k(m)$ represents modulation symbols (such as OFDM symbols).

Splitting the B channel bits of the input bitstream m into $B_v$ bits and $B_h$ bits advantageously allows for energy accumulation and limitation of the bandwidth of the transmit signal. The bandwidth limitation enables maximization of the spectral and energy efficiency particularly in situations of limited coverage.

The DFT output $s_{l,m}$ is mapped to time-frequency resources and then OFDM modulated by the OFDM modulator 46.

In one embodiment, additional information can be encoded in the ON-signal of the MC-OOK signal itself, by using multiple ON-signals.

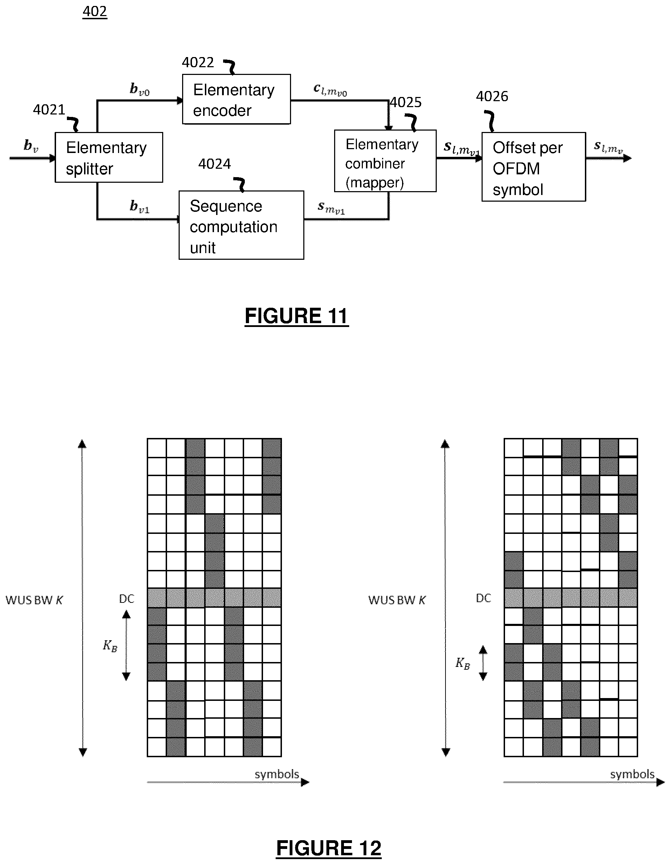

Figure 11 is a block diagram representing the vertical encoder 402, according to some embodiments.

It is assumed that $B_v = B_{v0} + B_{v1}$, where the $B_{v0}$ bits are encoded using the MC-OOK modulation performed by the MC-OOK modulator 42 and the $B_{v1}$ bits are encoded through different ON-signals $a_{m_{v1}}$ such that $a_{m_{v1}} = [a_{m_{v1}1}, a_{m_{v1}2}, ..., a_{m_{v1}KB}]$, the $B_{v1}$ bits corresponding to a message $m_{v1} = 0, 1, ..., 2^{Bv1} - 1$.

In one aspect, different cyclic shifts $C_{m_{v1}} = 0, 1, ..., K_B - 1$ per modulation symbol may be used to apply cyclic shifting to the combined signal $s_{l,m}$.

The longer the length of the ON-signal sequence, the better the cross-correlation between different sequences and hence the more reliable the decoding of the $B_{v1}$ bits.

In such embodiments, the first encoder 402 may comprise an elementary splitter 4021 configured to split (or 'demultiplex') the vertical bits $b_v$ into $b_{v0}$ bits and $b_{v1}$ bits. The $b_{v1}$ bits correspond to a message $m_{v1}$.

The first encoder 402 further comprises an elementary encoder 4022 configured to encode the $b_{v0}$ bits via different sequences, which provides $c_{l,m_{v0}}$ encoded sequences, and a Sequence computation unit 4024 configured to generate signals $s_{m_{v1}}$ or different messages $m_{v1}$ by applying different cyclic shifts $C_m$ to a predefined sequence.

The first encoder 402 also comprises an elementary combiner 4025 configured to combine the encoded bits $c_{l,m_{v0}}$ with the sequence $s_{m_{v1}}$ to map them to the transmit sequence $s_{l,m_{v1}}$.

The encoded sequence $c_{l,m_{v0}}$ for the $B_{v0}$ bits is defined as $C_{l,m_{v0}} = [c_{l,m_{v0}}(0), c_{l,m_{v0}}(1), c_{l,m_{v0}}(N - 1)]$ and may depend on modulation symbol $l$ (e.g. OFDM symbol) if different coded bits are transmitted.

It is considered that $K_B$ sub-carriers are used and that a number $K_C$ of resources are used per encoding. The length of the computed ON-signal $s_{m_{v1}}$ provided by the Sequence computation unit 4024 is denoted $K_{ON}$ with

$$K_{ON} = LK_B \left\lfloor \frac{K}{K_C} \right\rfloor$$ resource elements.

The computed ON-signal $s_{m_{v1}}$ delivered by the Sequence computation unit 4024 is defined as $s_{m_{v1}} = [s_{m_{v1}}(0), s_{m_{v1}}(1), ..., s_{m_{v1}}(K_{ON} - 1)]$.

In one embodiment, the first encoder 402 may optionally comprise a sub-carrier offset unit 4026 configured to apply a sub-carrier offset per OFDM symbol to the sequence $s_{l,m_{v1}}$, which provides a sequence $s_{l,m_v}$.

The transmitted signal $s_{l,m_v}$ is obtained by mapping $K_B$ consecutive elements of $s_{m_{v1}}$ to every position $k$ when the corresponding encoded bit $c_{l,m_{v0}}$ is equal to one, namely:

$$\left. \begin{array}{l} s_{l,m_v}(k) = s_{m_{v1}}(n) \ \text{ if } \ c_{l,m_{v0}}(\bar{k}) = 1 \\ s_{l,m}(k) = 0 \ \text{otherwise} \end{array} \right\} \quad (31)$$

In formula (31), $k$ is defined by $\bar{k} = \left\lfloor \frac{k}{K_B} \right\rfloor$, $k = 0,1,2, ..., K - 1$, $l = 1,2, ..., L$ and $n = 0,1,2, ..., K_{ON} - 1$.

In one embodiment, the sequence computation unit 4022 may generate the signals $s_{m_{v1}}$ as a cyclically shifted Zadoff-Chu sequence $x_u(n)$ of length $N_{ZC}$, the Zadoff-Chu sequence $x_u(n)$ being defined by:

$$x_u(n) = e^{-j\frac{\pi u n(n+1)}{N_{ZC}}} \quad (32)$$

In equation (32), $u$ denotes a root, such that root $u = 1,2, ..., N_{ZC} - 1$ and $n = 0,1, ..., N_{ZC} - 1$.

The signals $s_{m_{v1}}$ for different messages m are then obtained by applying different cyclic shifts $C_m$ to the Zadoff-Chu sequence $x_u(n)$ according to:

$$s_{m_{v1}}(t) = x_u\big((t + C_m) \bmod N_{ZC}\big) \quad (33\text{-}A)$$

In Equation (33-A), $t = 0,1, ..., K_{ON} - 1$ and $C_m = 0,1, ..., N_{ZC} - 1$.

The length $N_{ZC}$ may be advantageously a prime number so that its Fourier transform results in another ZC-sequences. Hence, if the number of resources $K_{ON}$ is larger than nearest prime $N_{ZC}$, $x_u(n)$ can be cyclically extended by using $n = 0,1, ..., K_{ON} - 1$.

It should be noted that the disclosure is not limited to the use of a predefined sequence of the type Zadoff-Chu sequence $x_u(n)$ to generate the signals $s_{m_{v1}}$ and may use other type of sequences, such as the ones used in 5G NR wireless systems including the gold sequence or the m-sequence.

For example, in one embodiment using a Gold sequence, a length-31 Gold sequence with output sequence $c_{G,m_{v1}}(n)$ of length M, $n = 0,1, ..., M - 1$ is considered, given by:

$$c_{G,m_{v1}}(n) = \big(x_1(n + N_C) + x_2(n + N_C)\big) \bmod 2 \quad (33\text{-}B1)$$

$$x_1(n + 31) = \big(x_1(n + 3) + x_1(n)\big) \bmod 2 \quad (33\text{-}B2)$$

$$x_2(n + 31) = \big(x_2(n + 3) + x_2(n + 2) + x_2(n + 1) + x_2(n)\big) \bmod 2 \quad (33\text{-}B3)$$

In Equation (33-B1), $N_C$ denotes an offset (for example $N_C = 1600$). Further, the sequence $x_1(n)$ is initialized

with $x_1(0) = 1$ and $x_1(n) = 0$ for $n$ = 1,2, ...,30, while the sequence $x_2(n)$ is initialized by $c_{init} = \sum_{i=0}^{30} x_2(i) \cdot 2^i$. In such embodiment, $c_{init}$ depends on message $m_{v1}$, and/or on user-specific or system parameters. For instance, $c_{init} = 2^{13} \cdot (2_{m_{v1}} + 1) + 2_{m_{v1}}$.

Subsequently, sequence $c_{G,m_{v1}}(n)$ is modulated to obtain signal $s_{m_{v1}}$. For instance, a QPSK modulated sequence $s_{m_{v1}}$ is given by

$$s_{m_{v1}}(i) = \frac{1}{\sqrt{2}}\left[\left(1 - 2c_{G,m_{v1}}(2i)\right) + j\left(1 - 2c_{G,m_{v1}}(2i + 1)\right)\right] \quad \text{(33-B4)}$$

In Equation (33-B4), i = 0,1, ..., $K_{ON}$ - 1 and $c_{G,m_{v1}}(n)$ is of length M = $2K_{ON}$.

The ON-signals in the vertical domain in one OFDM symbol can be considered as a single long sequence. Likewise, if $L > 1$ consecutive OFDM symbols are transmitted, the ON-signal spans across those $L$ symbols, as depicted in Figure 12 which shows two different exemplary WUS resource allocation configurations.

The two examples 120 A (on the left) and 120 B (on the right) of Figure 12 correspond to $L$ = 7 OFDM symbols used for transmission where the signal $s_{l,m}$ is cyclically shifted every OFDM symbol $l$ by $K_B$ sub-carriers. It is considered that a number $K_C$ of resources are used per encoding. The first exemplary configuration 120A of figure 12 (on the left) uses $K_C = K$ and $K_B = 4$ resource elements for the ON-signal and encodes $B_{v0}$ = 2 bits with the encode mapping defined in Table 1. The second exemplary configuration 120B of figure 12 (on the right) uses $K_C = K/2$ and $K_B = 2$ and encodes $B_{v0}$ = 4 bits by using 8 Resource Element (REs) to encode two bits according to the encoding mapping defined in Table 1. In the two exemplary cases, the length of the combined ON-signal provided by the elementary encoder 621 is

$$K_{ON} = LK_B \left\lfloor \frac{K}{K_C} \right\rfloor = 7 \cdot 4 = 28 \qquad \text{resource elements.}$$

The horizontal encoder 404 may be configured to map the selected $B_h$ bits into an horizontal code W comprising $L$ complex numbers from a given alphabet, such as a M-PSK alphabet.

The horizontal code $W$ may be constructed from the alphabet using a non-coherent block code. The use of a non-coherent block code $W$ is particularly advantageous if the number $B_h$ is too large to allow for orthogonal transmission over $L$ dimensions.

$L$ represents the number of modulation symbols (for example OFDM symbols) on which the information is spread and $K$ represents the minimal number of physical resource blocks (modulation carriers such as for example OFDM carriers). $\alpha$ represents the number of modulation carriers per resource block.

The horizontal code W may be an orthogonal or non-orthogonal code depending on the number of OFDM symbols $L$.

In embodiments where the horizontal code $W$ is constructed from a simpler orthogonal code, the elements of the orthogonal code may be chosen from a unitary signal set. Advantageously, the unitary signal set may be a unitary set where each component is of unit-amplitude.

An example of such an orthogonal code is the column or row of a Hadamard matrix (real or complex). Such codes have elements on the unit-circle and have additional properties which may be exploited for efficient algorithms (such as Fast-Fourier or Fast Hadamard Transforms algorithms).

In one embodiment, if the number of bits $B_h$ of the horizontal component is inferior or equal to $\log_2 L$, namely $B_h \leq \log_2 L$, then an orthogonal encoding scheme can be used to generate the horizontal code W. For example, the horizontal code W can be the DFT matrix of size $L$ and the associated codewords $w_{m_h}$ are the rows or columns of $W$ such that $m_h$ = 0,1, ..., $2^{B_h}$ - 1.

If the number of bits $B_h$ of the horizontal component is strictly superior to $\log_2 L$, namely if $B_h > \log_2 L$, a non-coherent linear code can be used to generate the codewords $w_{m_h}$.

For example, in one embodiment, the horizontal code $W$ may be chosen as a codeword $\lfloor m_h \, 2^{-B_h} \rfloor$, from a ($L$, $B_h$) linear error correcting code, having a length $L$ and a rank ($B_h$), the linear error correcting code being represented by a generator matrix $G(B_h, L)$ given in a systematic form:

$$G(B_h, L) = \left( I_{B_h} \quad G_{B_h \times (L - B_h)} \right) \quad \text{(34)}$$

In equation 34, $I_{B_h}$ designates the identity matrix of dimensions $B_h \times B_h$, $G_{B_h \times}(L - B_h)$ designates a rectangular

matrix comprising $B_h$ lines or row vectors and $L - B_h$ columns or column vectors. The linear error correcting code may be generated for example as described in EP3955482 A1.

EP3955482 A1 describes a device for determining such linear error correcting code.

The linear error correcting code may be binary or quaternary or 4-ary code.

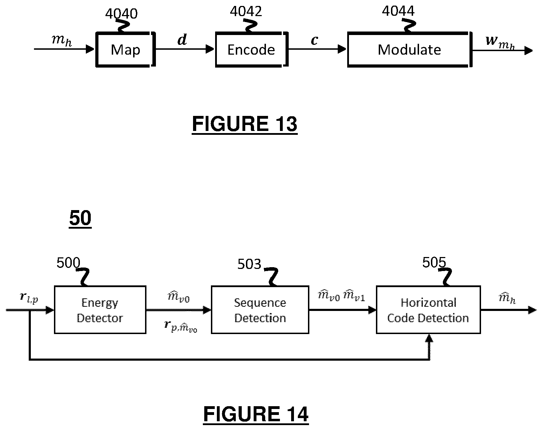

Figure 13 is a diagram depicting the horizontal encoder 404 in an embodiment where a non-coherent linear code is used to generate the codewords $w_{m_h}$.

As depicting in Figure 13, the horizontal encoder 404 may comprise a message mapper 4040 configured to map the message $m_h$ comprising the $B_h$ bits to a base, such as a base $Q_B = 4$, in order to deliver a sequence d, the sequence d being defined as d = $[d_0, d_1, ..., d_{Q-1}]$, with $Q = \lfloor B_h/\log_2 Q_B \rfloor$ (for example $B_h = 4$, $m_h = 7 = [0\ 1\ 1\ 1]$ and the mapping of $m_h$ into the base $Q_B = 4$ provides d= [1 3]).

The horizontal encoder 404 further comprise a linear error correcting encoder 4042 configured to encode the sequence $d = [d_0, d_1, ..., d_{Q-1}]$ using a generator matrix G as $c = dG$, where c represents the encoded sequence and the elements of the generator matrix are in base $Q_B$.

The horizontal encoder 404 also comprises an elementary modulator 4044 configured to modulate the encoded sequence c to determine complex symbols $w_{mn}$ as, e.g. $w_{mn} = e^{i2\pi c_n/Q_B}$.

In the embodiments where the components $B_h$ and $B_v$ are such that $B_h < B_v$, the error probability for the $B_h$ bits is lower, offering unequal error protection. The same is true if the condition is reversed in which case the error probability of the $B_v$ bits is lower.

In the embodiments using vertical/horizontal encoding, the LP WU receiver 52 may be an optimal ML receiver defined by:

$$\hat{m} = \arg\max_m \sum_{p=1}^{P} \left\| \sum_{l=1}^{L} r_{l,p}^H s_{l,m} \right\|^2 \quad (35)$$

In Equation (35), $s_{l,m}$ is the hypothesis (or estimate) of the message m in symbol $l$.

In embodiments where the input bits $B_v$ are split into $B_{v0}$ and $B_{v1}$, the Vertical/Horizontal-code structure allows for a hierarchical detection, reduced complexity, where messages $m_{v0}$, $m_{v1}$ and $m_h$ are detected separately.

Figure 14 depicts the signal detector 52, according to such embodiments with hierarchical reduced complexity detection.

The signal detector 50 comprises an elementary envelope detector 500 configured to first decode the $m_{v0}$ message, i.e. after aligning the offsets per OFDM symbol, according to equation (36):

$$\hat{m}_{v0} = \arg\max_{m_{v0}} \sum_{p=1}^{P} \sum_{l=1}^{L} \sum_{k=m_{v0}K_B+1}^{m_{v0}K_B+1+K_B} \left\| r_{k,l,p} \right\|^2 \quad (36)$$

In Equation (36), $r_{k,l,p}$ denotes the element k, l, p (frequency/time/antenna indexes respectively) of the received signal r.

The signal detector 52 further comprises a sequence detector 503 configured to then detect, in the next step, the message $m_{v1}$ under different hypothesis $\hat{m}_{v0}$, by correlating with all possible sequences $s_{m_{v1}}$. The sequence detector 503 then provides an estimated message $\hat{m}_{v1}$ corresponding to an estimation of message $m_{v1}$ under different hypothesis $\hat{m}_{v0}$, according to:

$$\hat{m}_{v1} = \arg\max_{m_{v1}} \sum_{p=1}^{P} \left\| r_{p,\hat{m}_{v0}}^H s_{m_{v1}} \right\|^2 \quad (37)$$

In equation (37), $r_{p,\hat{m}_{v0}}$ represents the extracted ON-signals of the WU signal under hypothesis $\hat{m}_{v0}$ of the received vector on antenna p.

The receiver 52 also comprises a horizontal code detector 505 configured to detect, in the last step, the horizontal code $m_h$ by determining an estimate $\hat{m}_h$ of the horizontal code message $m_h$ defined as:

$$\hat{m}_h = \arg\max_{m_h} \sum_{p=1}^{P} \left\| \sum_{l=1}^{L} r_{l,p}^H s_{l,m_h,\hat{m}_{v0},\hat{m}_{v1}} \right\|^2 (38)$$

In equation (« 8), $s_{l,m_h,\hat{m}_{v0},\hat{m}_{v1}}$ are the hypothesis on $m_h$ given the hypotheses on the vertical dimension $\hat{m}_{v0}$, $\hat{m}_{v1}$.

From the hypotheses, and depending on the bit mapping, the overall message $\hat{m}$ may be finally determined by the receiver 5 as:

$$\hat{m} = \hat{m}_{v0} + \hat{m}_{v1} 2^{B_{v0}} + \hat{m}_h 2^{B_{v0}+B_{v1}} \ (39)$$

This receiver 52 can significantly reduce the complexity. For instance, considering an exemplary case where $B_{v0}$ = 3, $B_{v1}$ = 3 and $B_h$ = 4, that is $B$ = 10 bits of payload, the full complexity receiver 5 requires $2^{10}$ = 1024 correlations, whereas a low complexity receiver does envelope detection followed by $2^3$ = 8 correlations for $B_{v1}$ and $2^4$ = 16 correlations for $B_h$ assuming only one hypothesis per step.

In some aspects, the WUS signal generated by the transmitter 4 may correspond to three different types of WUS messages, including:

- A Wake-up Message intended to wake up one or multiple User Equipments UE 1 notifying them to turn on the main radio and monitor paging messages.
- A WUS Control Message signaling a change in WUS control configuration, e.g. change in WUS monitoring period and allowing to adapt the WUS configuration without powering up the main radio.
- A WUS Small Data Message enabling to transmit a small payload in the WUS, e.g. to activate a sensor or change the operation mode of a sensor. A WUS Small Data Message allows the UE 1 to stay in low power mode (main radio off) and still receive data (commands) from the base-station, thereby significantly increasing the battery life.

The WUS resource, i.e. the configured time-frequency resources that the UE 1 is monitoring, can be configured to support any combination of the different messages. For instance, one WUS resource may be configured only for Wake-up messages, where as another WUS resource may be configured to support both wake-up and small data messages.

The more message types are supported per WUS resource, the higher the signaling overhead to indicate the message type.

In the embodiments using vertical/horizontal encoding, different error protection and decoding complexity for messages $m_{v0}$, $m_{v1}$ and $m_h$ may be achieved so that it may be beneficial to allocate the WUS payload accordingly.

In such embodiment the vertical messages $m_{v0}$, $m_{v1}$ and the horizontal messages $m_h$ may be configured or allocated to carry different types of information and/or different types of WUS messages.

If multiple message types are supported, the signaling may be included in the more protected bits, e.g. $B_{v0}$ or $B_{v1}$.

For example, for a Wake-up message used to wake up a UE 1 or a group of UEs 1, it is assumed that a UE 1 is allocated a group ID and an ID within that group during the initial WUS configuration setup.

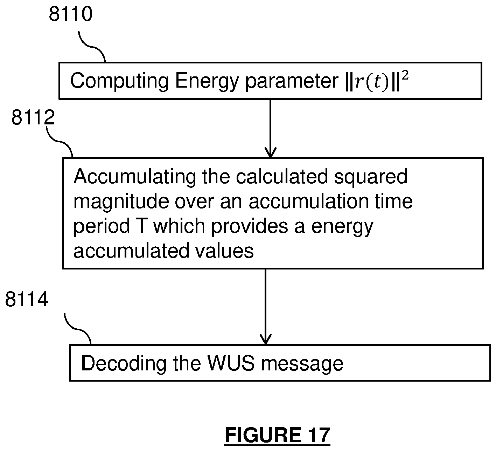

Figure 17 below provides an exemplary bit allocation configuration that can be used for this type of message. Table 3 indicates for each scheme 1, 2 and 3 how the bits $B_{v0}$, $B_{v1}$ and $B_h$ are allocated.

| Scheme | $B_{v0}$ | $B_{v1}$ | $B_h$ |
|---|---|---|---|
| 1 | The $B_{v0}$ bits carry the Group ID | 2 sequences = 1 bit to indicate all UEs in group or particular UEs | $B_h$ = 0 if all UEs are woken up. Otherwise $B_h$ indicates which UEs are woken up, e.g. via a bitmap |
| 2 | The $B_{v0}$ bits carry the Group ID | Sub-group ID with one sequence reserved to indicate all UEs in selected Group/sub-group | $B_h$ is allocated similarly to scheme 1 |
| 3 | • 1 bit to indicate broadcast (all configured UEs) or groupcast<br>• Group ID if groupcast | $B_{v1}$ = 0, a single sequence | $B_h$ is allocated similarly to scheme 1 |

The Group ID refers to the identifier of a UE group if groupcast is used.

The UEs 1R that only implement Envelope detection can only receive $B_{v0}$, e.g. only wake-up messages.

A WUS control message is configured to switch between different preconfigured WUS configurations without turning on the main radio. A WUS control message carries control information.

Similarly to a wake-up message, a control message can be addressed to all configured UEs 1 or to a subset of UEs 1.

In one embodiment, one or more WUS resources may be only configured for control signaling. In such case, the control information comprised in a WUS control message may indicate to which WUS resource the control change is associated.

The WUS control information comprised in a WUS message may comprise WUS configuration parameters such as:

- The supported message types;
- The monitoring periodicity ;
- The WUS resource configuration including the time-frequency allocation, the number of repetitions;
- The frequency hopping configuration;
- The WUS resource ID (change the WUS configuration of a different WUS resource than the one the control information is transmitted on).

A small data message is a message that is used to transmit small amounts of data from a transmitting User Equipment 1T to receiving User Equipments 1R via the WUS signal. The payload size of a small data message is very limited. A small data message may be used for example in IoT applications, for example to include IoT scenarios with long battery lifetime requirements. A typical scenario is a fixed/nomadic sensor, that when first setup connects to the network and acquires all the necessary configurations. Subsequently, the fixed/nomadic sensor turns off the main radio and activates the wake-up radio so that it can receive commands through the small data message without having to activate the main radio. The commands can be as simple as 'open' and 'close' commands for an electronic valve. This allows the sensor to keep the main radio off for as long as possible and therefore extending its battery life significantly.

The WUS resource may be configured to support small data transmission.

The UEs 1 can be addressed similarly as the wake-up message via the $B_{v0}$ and $B_{v1}$ bits while the payload is transmitted in $B_h$. To further reduce power consumption, the UEs 5 may only implement an envelope detector 52 and hence can only receive $B_{v0}$. In that case, the UE identification and the payload are transmitted on $B_{v0}$. For instance, consider the WUS configuration where 3 bits are transmitted in the first 7 symbols and another 3 bits in the subsequent 7 symbols, the first 3 bits can serve as UE identification whereas the subsequent 3 bits are the payload.

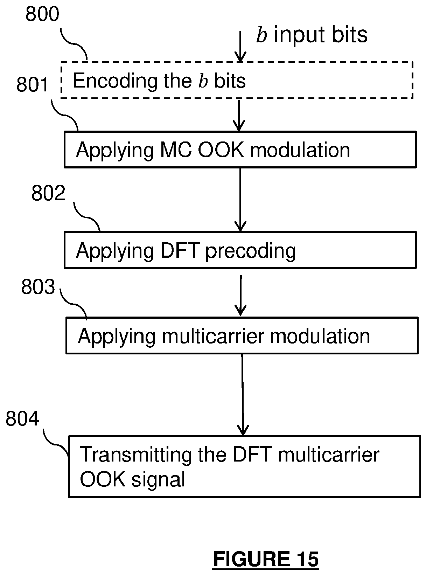

Figure 15 depicts a method for generating and transmitting a WUS message as a DFT precoded MC OOK signal.

In step 800, the input bits b = $[b_0, b_1, ..., b_{B-1}]$ are received.

In step 800, the input bits b may be previously encoded using one or more modulation schemes into encoded bits c.

In step 801, MC-OOK modulation is applied to the input b = $[b_0, b_1, ..., b_{B-1}]$ or to the encoded bit c if encoded is used at step 800, which provides a MC-OOK modulated signal $s_m$ for the message m, the signal $s_m$ comprising $B$ elements $s_i$. The MC-OOK modulation step 801 comprises mapping a ON-signal $a$ comprising $K_B$ elements such as $a = [a_0, a_1,..., a_{K_B-1}]$ to each element $s_i$ of the MC-OOK modulated signal $s_m$ whenever the corresponding input bit $b_i$ is equal to one, and a value zero otherwise, the ON-signal a being a complex sequence.

In step 802, Discrete Fourier Transform (DFT) precoding is applied to the signal $s_m$, which provides a resulting signal $S_m$.

In step 803, single or multicarrier modulation is applied to the resulting signal $S_m$ provided by the DFT-precoding step 802.

In step 804, a WUS message derived from the signal x(t) determined by the single or multicarrier modulator (46) is transmitting to on ore more receiving wireless devices 1R using one or more transmit antennas.

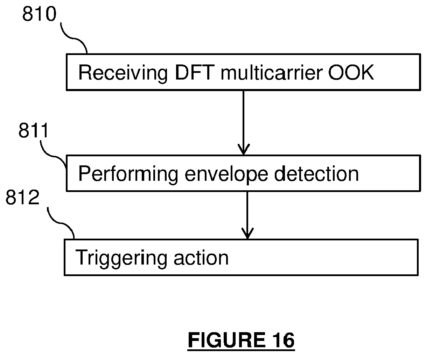

Figure 16 depicts a receiving method for decoding a WUS message received from a transmitter 4 as a DFT precoded MC OOK signal.

In step 810, the WUS message is received and pre-processed to provide a signal r(t) derived from the received WUS message.

In step 811, envelope detection is perform using the signal r(t) derived from the received WUS message, the signal r(t) being a base-band signal r(t) determined from the WUS signal. The Envelope Detection step (implemented in the LP-WU receiver 51) uses the received energy corresponding to each candidate signal for detection and determination of an estimate $\hat{m}$ of the received WUS message.

In step 812, an action may be triggered based on the decoded WUS message (such as for example activation of the main receiver 51 depending on the ON/OFF value of the WUS message).

Figure 17 is a flowchart depicting the envelope detection step according to some embodiments. As shown in figure 17, the envelope detection step 811 may comprise:

- computing in step 8110 an energy parameter $||r(t)||^2$ by squaring the magnitude of samples of the base-band signal r(t),

- accumulating in step 8112 energy over the $T$ samples of the base-band signal $||r_p(t)||^2$, which provides $N$ accumulated energy values $u_n$ of each coded bit in a codeword,

- decode in step 8114 the WUS signal received from the transmitter (4) from the $N$ accumulated energy values $u_n$ to determine an estimated input message $\hat{m}_n$.

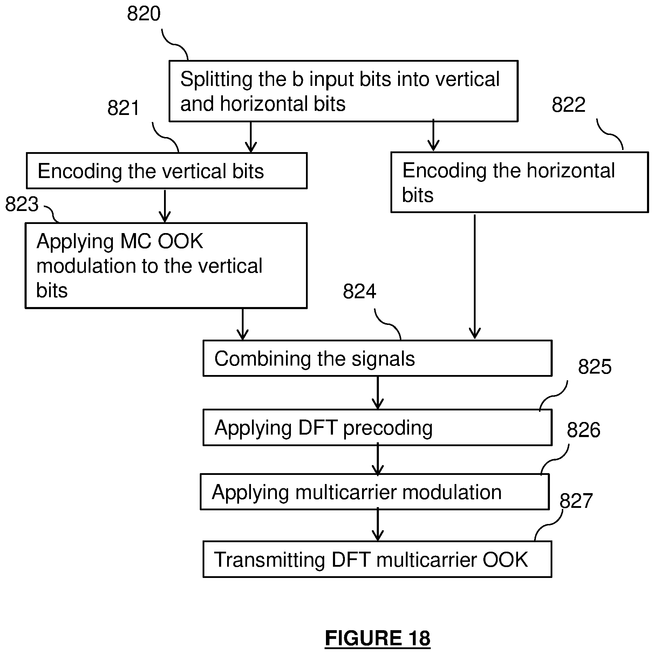

Figure 18 depicts a method for generating and transmitting a WUS message as a DFT precoded MC OOK signal.

In step 820, the input bits b = [$b_0$, $b_1$, ..., $b_{B-1}$] are split into $b_v$ vertical bits and $b_m$ horizontal bits.

In step 821, the $b_v$ vertical bits are encoded into c.

In step 823, MC-OOK modulation is applied to the encoded vertical bits c, which provides MC-OOK modulated signals $s_{l,m_v}$ for the message $m_v$. The MC-OOK modulation step 823 comprises mapping a ON-signal $a$ comprising $K_B$ elements such as $a = [a_0, a_1, ..., a_{K_B-1}]$ to each element of the MC-OOK modulated signal $s_{l,m_v}$ whenever the corresponding input bit $b_i$ is equal to one, and a value zero otherwise, the ON-signal a being a complex sequence.

In step 822, the $b_h$ horizontal bits are encoded into $w_{l,m_h}$ codewords.

In step 824, the MC OOK signals and the encoded $b_h$ horizontal bits are combined into $s_{l,m}$ signals.

In step 825, Discrete Fourier Transform (DFT) precoding is applied to the combined $s_{l,m}$ signals.

In step 826, single or multicarrier modulation is applied to the DFT precoded sequence provided by at step 825.

In step 827, a WUS message derived from the signal $x_l(t)$ determined by the single or multicarrier modulator is transmitting to on ore more receiving wireless devices 1R using one or more transmit antennas.

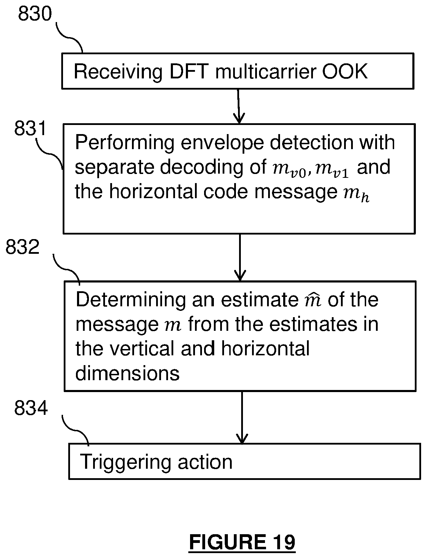

Figure 19 depicts a receiving method for decoding a WUS message received from a transmitter 4 as a DFT-precoded MC OOK signal.

In step 830, the WUS message is received.

In step 831, envelope detection is performed using a signal r(t) derived from the WUS signal received form the transmitter 4, the signal r(t) being a base-band signal r(t) determined from the WUS signal. In step 832, the Envelope Detection step determines and uses the received energy corresponding to each candidate signal, for detection and determination of an estimate $\hat{m}$ of the received WUS message. However, the vertical messages $m_{v0}$, $m_{v1}$ and the horizontal code message $m_h$ are detected separately.

In step 832, an estimate $\hat{m}$ of the message m is determined according to:

$$\hat{m} = \hat{m}_{v0} + \hat{m}_{v1} 2^{B_{v0}} + \hat{m}_h 2^{B_{v0}+B_{v1}}$$

In step 834, an action may be triggered based on the decoded WUS message (such as for example activation of the main receiver depending on the ON/OFF value of the WUS message).

The communication system 100 according to the embodiments of the invention may be used in various applications such as Machine-To-Machine (M2M), Web-of-Things (WoT), and Internet of Things (IoT) (for example vehicle-to-everything V2X communications) involving networks of physical devices, machines, vehicles, home alliances and many other objects connected to each other and provided with a connectivity to the Internet and the ability to collect and exchange data without requiring human-to-human or human-to-computer interactions.

For example, in IoT applications, the communication system 100 may be a wireless network, for example a wireless IoT/M2M network representing low energy power-consumption/long battery life/low-latency/low hardware and operating cost/high connection density constraints such as low-power wide area networks and low-power short-range IoT networks. Exemplary technologies used in such applications may comprise 5G, LTE-NB1 (Long Term Evolution-Machine to Machine, Narrow Band) and NB-IoT (NarrowBand IoT).

The communication system 100 may be used in various consumer, commercial, industrial, and infrastructure applications. Exemplary consumer applications comprise connected vehicles (Internet of Vehicles IoV), home automation/smart home, smart cities, wearable technology, and connected health. Exemplary commercial applications comprise medical and healthcare and transportation. In the medical field, a digitized healthcare system connecting medical resources and healthcare services may be used in which special monitors and sensors are used to enable remote health monitoring and emergency notification. Exemplary industrial applications comprise applications in agriculture, for example in farming using sensors, to collect data on temperature, rainfall, humidity, wind speed, and soil content. Exemplary infrastructure applications may comprise the use of IoT devices to perform monitoring and controlling operations of urban and rural infrastructures such as bridges and railway tracks.

A wireless device 1 may be any physical internet-enabled device/object provided with required hardware and/or software technologies enabling communication over Internet. A wireless device 1 may be any standard internet connected-devices such as desktop computers, servers, virtual machines laptops, smart-phones, tablets. In some applications, the wireless device 1 may be any IoT/M2M device or connected device operating in an IoT/M2M network such as medical devices, temperature and weather monitors, connected cards, thermostats, appliances, security devices, drones, smart clothes, eHealth devices, robots, and smart outlets.

Embodiments of the present invention can take the form of an embodiment containing software only, hardware only or both hardware and software elements.

Furthermore, the methods described herein can be implemented by computer program instructions supplied to the processor of any type of computer to produce a machine with a processor that executes the instructions to implement the functions/acts specified herein. These computer program instructions may also be stored in a computer-readable medium that can direct a computer to function in a particular manner. To that end, the computer program instructions may be loaded onto a computer to cause the performance of a series of operational steps and thereby produce a computer implemented process such that the executed instructions provide processes for implementing the functions specified herein.

It should be noted that the functions, acts, and/or operations specified in the flow charts, sequence diagrams, and/or block diagrams may be re-ordered, processed serially, and/or processed concurrently consistent with embodiments of the invention. Moreover, any of the flow charts, sequence diagrams, and/or block diagrams may include more or fewer blocks than those illustrated consistent with embodiments of the invention.

While embodiments of the invention have been illustrated by a description of various examples, and while these embodiments have been described in considerable detail, it is not the intent of the applicant to restrict or in any way limit the scope of the appended claims to such detail.

In particular, although the invention has particular advantages in embodiments using OFDM modulation, the invention also applies to other type of single-carrier and multi-carrier modulation.

Additional advantages and modifications will readily appear to those skilled in the art. The invention in its broader aspects is therefore not limited to the specific details, representative methods, and illustrative examples shown and described.

**Claims**

1. A wireless device (1) in a communication system (100), the wireless device comprising a transmitter (4) configured to transmit a Wake-Up Signal (WUS) message m = 0,1, ..., $2^B$ - 1 from an input bit vector $b = [b_0, b_1, ..., b_{B-1}]$ comprising $B$ bits $b_i$ through a communication channel in the communication system (100) using single or multi-carrier modulation, the transmitter (4) comprising a set of transmit antennas, wherein the transmitter comprises :

   - a splitter (400) configured to split the input message m into a first component $b_v = [b_{v0}, b_{v1}, ..., b_{vBv}-1]$ comprising $B_v$ bits and corresponding to a message $m_v \in [0,1, ..., 2^{Bv} - 1]$ and a second component $b_h = [b_{h0}, b_{h1}, ..., b_{hBh}-1]$ comprising $B_h$ bits and corresponding to a message $m_h \in [0,1, ..., 2^{Bh} - 1]$ such that $B = B_h + B_v$, using a set of splitting parameters;
   - A vertical encoder (402) configured to encode the $B_v$ bits, which provides encoded bits c;
   - a Multi-Carrier On-Off Keying (MC-OOK) modulator (42) configured to apply a MC-OOK modulation to the encoded bits c, which provides MC-OOK modulated signals $s_{m_v}$ for the message m, the encoded bits c comprising elements $c_i$,
   - A horizontal encoder (404) configured to encode the $B_h$ bits, which provides an horizontal codeword $w_{m_h} = [w_{1,m_h}, w_{2,m_h}, ..., w_{L,m_h}]$ where $w_{l,m_h}$ is a complex symbol and $L$ is the number of modulation symbols over which the horizontal code is applied,
   - a combiner (14) configured to combine the MC-OOK modulated signals $s_{m_v}$ with said horizontal codewords $w_{m_h}$, which provides a combined code sequence, wherein the transmitter (1) further comprises:

      - a Discrete Fourier Transform (DFT) precoder (44) configured to apply DFT-precoding to the combined sequence $s_{l,m}$, which provides a resulting signal $S_m$;
      - a single or multicarrier modulator (46) configured to apply single or multicarrier modulation to the resulting signal $S_m$ output by the DFT-precoder (44),

   the transmitter (4) being configured to transmit a WUS message derived from the signal $x_l(t)$ determined by the single or multicarrier modulator (46) using one or more transmit antennas,
   wherein the MC-OOK modulator (42) is configured to map a ON-signal $a$ comprising $K_B$ elements such as $a = [a_0, a_1, ..., a_{KB}-1]$ to each element $s_{l,m_v}$ of the MC-OOK modulated signal $s_m$ whenever the corresponding input bit $c_i$ is equal to one, and a value zero otherwise.

2. The wireless device according to claim 1, wherein the combiner (405) is configured to perform said combination by computing the product of the signal $s_{l,m_v}$ generated by the MC-OOK modulator (42) and of the horizontal codeword $w_{m_h}$ according to:

$$s_{l,m} = s_{l,m_v} \cdot w_{l,m_h}.$$

3. The wireless device according to any preceding claim, wherein the vertical encoder (402) comprises:

- an elementary splitter (4021) configured to split the vertical bits $b_v$ into $b_{v0}$ bits and $b_{v1}$ bits such that $b_v = b_{v0} + b_{v1}$, the $b_{v0}$ bits correspond to a message $m_{v0}$ and the $b_{v1}$ bits correspond to a message $m_{v1}$,
- an elementary encoder (4022) configured to encode the $b_{v0}$ bits via different sequences, which provides $c_{l,mvo}$ encoded sequences,
- a Sequence computation unit (4024) configured to compute a sequence $s_{m_{v1}}$ from the $b_{v1}$ bits and a predefined sequence,
- an elementary combiner (4025) configured to combine the encoded bits $c_{l,m_{v0}}$ determined by the elementary encoder (4022) with the sequence $s_{m_{v1}}$ determined by the Sequence computation unit (4024) to map them to a transmit sequence $s_{l,m_{v1}}$,

wherein the ON-signal correspond to the the sequence $s_{m_{v1}}$ computed by the Sequence computation unit (4024).

4. The wireless device according to claim 3, wherein the single or multi-carrier modulation uses $K_B$ sub-carriers and a number $K_C$ of resources per encoding, and wherein the length of the sequence $s_{m_{v1}}$ provided by the sequence

$$K_{ON} = LK_B \left\lfloor \frac{K}{K_C} \right\rfloor$$

computation unit (624) is resource elements.

5. The wireless device according to claim 4, wherein the output sequence $s_{l,m_v}$ is determined by mapping $K_B$ consecutive elements of the sequence $s_{m_{v1}}$ to every position $k$ when the corresponding encoded bit $c_{l,m_{v0}}$ is equal to one:

$$s_{l,m_v}(k) = s_{m_{v1}}(n) \quad \text{if} \quad c_{l,m_{v0}}(\bar{k}) = 1,$$

and

$$s_{l,m}(k) = 0,$$

otherwise,

with $\bar{k} = \left\lfloor \frac{k}{K_B} \right\rfloor$, $k = 0,1,2, ..., K - 1$, $l = 1,2, ..., L$ and $n = 0,1,2, ..., K_{ON} - 1$.

6. The wireless device according to any preceding claim, wherein the sequence computation unit (4024) is configured to generate the sequence $s_{m_{v1}}$ as a cyclically shifted Zadoff-Chu sequence $x_u(n)$ of length $N_{ZC}$, the Zadoff-Chu sequence $x_u(n)$ being defined by:

$$x_u(n) = e^{-j\frac{\pi u n(n+1)}{N_{ZC}}}$$

with $u = 1,2, ...,N_{ZC} - 1$ and $n = 0,1, ...,N_{ZC} - 1$.

7. The wireless device according to any preceding claim, wherein the sequence $s_{m_{v1}}$ for different messages m are determined by applying different cyclic shifts $C_m$ to the Zadoff-Chu sequence $x_u(n)$ according to:

$$s_{m_{v1}}(t) = x_u\big((t + C_m) \bmod N_{ZC}\big)$$

with t = 0,1, ...,$K_{ON}$ - 1 and $C_m$ = 0,1, ...,$N_{ZC}$ - 1.

**8.** The wireless device according to any preceding claim, wherein if the number of bits $B_h$ of the horizontal component is inferior or equal to $\log_2 L$, then an orthogonal encoding scheme is used to generate the horizontal code W and if the number of bits $B_h$ of the horizontal component is strictly superior to $\log_2 L$, a non-coherent linear code is used to generate the codewords $w_{mh}$.

**9.** The wireless device according to any preceding claim, wherein the horizontal code $W$ is chosen as a codeword from a $(L, B_h)$ linear error correcting code, having a length $L$ and a rank $(B_h)$, the linear error correcting code being represented by a generator matrix $G(B_h, L)$ given in a systematic form:

$$G(B_h, L) = \begin{pmatrix} I_{B_h} & G_{B_h \times (L - B_h)} \end{pmatrix}$$

$I_{B_h}$ designating the identity matrix of dimensions $B_h \times B_h$, and $G_{B_h} \times (L - B_h)$ designating a rectangular matrix comprising $B_h$ lines or row vectors and $L$ - $B_h$ columns or column vectors.

**10.** The wireless device of any preceding claim, wherein the horizontal encoder (4024) comprises a message mapper (4040) configured to map the message $m_h$ comprising the $B_h$ bits to a base and deliver a sequence d, the sequence d being defined as $d = [d_0, d_1, ..., d_{Q-1}]$ , a linear error correcting encoder (4042) configured to encode the sequence $d = [d_0, d_1, ..., d_{Q-1}]$ using a generator matrix G as $c = dG$, where c represents an encoded sequence, and an elementary modulator (4044) configured to modulate the encoded sequence c to determine the horizontal codeword $w_{mh}$.

**11.** A receiver (5) configured to receive and decode a WUS message sent by a transmitting wireless device (1) according to any preceding claim, wherein the receiver (5) comprises an envelope detector (50) configured to perform envelope detection from a signal r(t) derived from the WUS signal received from the transmitter (4), the signal r(t) being a base-band signal r(t) determined from the WUS signal, the envelope detector (50) being configured to use the received energy corresponding to each candidate signal for detection and determination of an estimate $\hat{m}$ of the received WUS message.

**12.** The receiver (5) of claim 11 and 3, wherein the vertical messages $m_{v0}$, $m_{v1}$ and the horizontal code message $m_h$ are detected separately.

**13.** The receiver (5) of claim 12, wherein the receiver (5) comprises an elementary envelope detector (500) configured to first decode the message $m_{v0}$ to determine an estimate hypothesis $\hat{m}_{v0}$, of the message $m_{v0}$, the receiver (5) further comprises a sequence detector (51) configured to then detect the message $m_{v1}$ under different estimate hypotheses $\hat{m}_{v0}$ on message $m_{v0}$, by correlating with possible sequences $s_{m_{v1}}$ computed by the sequence computation unit (4024), the sequence detector (51) being configured to determine an estimated message $\hat{m}_{v1}$ corresponding to an estimate of message $m_{v1}$ under the different estimate hypotheses $\hat{m}_{v0}$ on message $m_{v0}$, the receiver comprising a horizontal code detector (503) configured to detect the horizontal code message $m_h$ by determining an estimate $\hat{m}_h$ of the horizontal code message $m_h$ under estimate hypotheses on message $m_h$ given the hypotheses $\hat{m}_{v0}$ and $\hat{m}_{v1}$ on messages $m_{v0}$ and $m_{v1}$.

**14.** The receiver (5) of claim 13, wherein the receiver (5) is configured to determine an estimate $\hat{m}$ of the message m according to:

$$\hat{m} = \hat{m}_{v0} + \hat{m}_{v1} 2^{B_{v0}} + \hat{m}_h 2^{B_{v0} + B_{v1}}$$

**15.** A method of transmitting a Wake-Up Signal (WUS) message m = 0,1, ..., $2^B$ - 1 from an input bit vector b comprising B input bits $b_i$, the method being implemented in a wireless devices (1) in a communication system (100), the WUS message being transmitted to one or more wireless devices in the communication system through a communication channel using single or multi-carrier modulation, the transmission using a set of transmit antennas, wherein the method comprises :

- splitting the input message m into a first component $b_v = [b_{v0}, b_{v1}, ..., b_{vB_V}-1]$ comprising $B_v$ bits and corresponding to a message $m_v \in [0,1, ..., 2^{B_v} - 1]$ and a second component $b_h = [b_{h0}, b_{h1}, ..., b_{hBh}-1]$ comprising $B_h$ bits and corresponding to a message $m_h \in [0,1, ...,2^{B_h} - 1]$ such that $B=B_h + B_v$, using a set of splitting parameters;
- performing vertical encoding of the $B_v$ bits, which provides encoded bits c;
- applying Multi-Carrier On-Off Keying (MC-OOK) modulation to the encoded bits c, which provides MC-OOK modulated signals $s_{m_v}$ for the message m, the encoded bits c comprising elements $c_i$,
- performing horizontal encoding of the $B_h$ bits, which provides an horizontal codeword $w_{m_h} = [w_{1,m_h}, w_{2,m_h}, ..., w_{L,m_h}]$ where $w_{l,m_h}$ is a complex symbol and $L$ is the number of modulation symbols over which the horizontal code is applied,
- combining the MC-OOK modulated signals $s_{m_v}$ with said horizontal codewords $w_{m_h}$, which provides a combined code sequence,
wherein the method further comprises:

- applying Discrete Fourier Transform (DFT) precoding to the combined sequence $s_{l,m}$, which provides a resulting signal $S_m$;
- applying single or multicarrier modulation to the resulting signal $S_m$ output by the DFT-precoding step,

the method comprising transmitting a WUS message derived from the signal $x_l(t)$ determined by the single or multicarrier modulator (46) using one or more transmit antennas,
wherein the MC-OOK modulation step comprises mapping a ON-signal a comprising $K_B$ elements such as $a = [a_0, a_1, ..., a_{K_B-1}]$ to each element $s_{l,m_v}$ of the MC-OOK modulated signal $s_m$ whenever the corresponding input bit $c_i$ is equal to one, and a value zero otherwise.

<u>**100**</u>

3

1

BS

1T

1R

UE

7

UE

<u>**FIGURE 1**</u>

<u>1</u>

Wireless Device

Transmitter **4**

LP Wake-up device **6**

**5**

Main Receiver **51**

LP-WU Receiver **52**

<u>FIGURE 2</u>

<u>4</u>

42　　　　　　　　44　　　　　　　46　　　DFT-multicarrier
　　　　　　　　　　　　　　　　　　　　　　　　　　OOK signal

$b$ →  MC-OOK Modulator  →$s_m$→  DFT precoding  →$S_m$→  Multicarrier modulation  →$x(t)$

**FIGURE 3**

**FIGURE 4**

**4**

40

| $b$ → | Encoder | $c$ → | MC-OOK Modulation | $s_m$ → | DFT Precoding | $S_m$ → | OFDM Modulation | $x(t)$ → |

41 42 46

## FIGURE 5A

**4**

40

| $b$ → | Encoder | $c$ → | MC-OOK Modulation | $s_m$ → | Repetition with Shift | $s_{l,m}$ → | DFT Precoding | $S_{l,m}$ → | OFDM Modulation | $x_l(t)$ → |

41 43 42 46

## FIGURE 5B

500

$r(t)$ → | Energy Computation | → $\|r(t)\|^2$ → | Energy Accumulation | → $p_n$ → | Decoding | → $\hat{b}$

**FIGURE 6**

**50**

502                    504                    506

$r(t)$ → | Energy Computation | → $\|r(t)\|^2$ → | Energy Accumulation | → $p_i$ → | Threshold Detection | → $\hat{b}_i$

**FIGURE 7**

**FIGURE 8**

**FIGURE 9**

**FIGURE 10**

402

4022

$b_{v0}$ → Elementary encoder → $c_{l,m_{v0}}$

4025

4021

$b_v$ → Elementary splitter

4024

$b_{v1}$ → Sequence computation unit → $s_{m_{v1}}$

Elementary combiner (mapper) → $s_{l,m_{v1}}$

4026

Offset per OFDM symbol → $s_{l,m_v}$

## FIGURE 11

WUS BW $K$    DC

$K_B$

symbols

WUS BW $K$    DC

$K_B$

symbols

## FIGURE 12

35

**FIGURE 13**

**FIGURE 14**

*b* input bits

800

801 Encoding the *b* bits

Applying MC OOK modulation

802

Applying DFT precoding

803

Applying multicarrier modulation

804

Transmitting the DFT multicarrier OOK signal

**FIGURE 15**

810

Receiving DFT multicarrier OOK

811

Performing envelope detection

812

Triggering action

**FIGURE 16**

8110

| Computing Energy parameter $\|r(t)\|^2$ |
|---|

8112

| Accumulating the calculated squared magnitude over an accumulation time period T which provides a energy accumulated values |
|---|

8114

| Decoding the WUS message |
|---|

**FIGURE 17**

820

Splitting the b input bits into vertical and horizontal bits

821

Encoding the vertical bits

822

Encoding the horizontal bits

823

Applying MC OOK modulation to the vertical bits

824

Combining the signals

825

Applying DFT precoding

826

Applying multicarrier modulation

827

Transmitting DFT multicarrier OOK

**FIGURE 18**

830

Receiving DFT multicarrier OOK

831

Performing envelope detection with separate decoding of $m_{v0}, m_{v1}$ and the horizontal code message $m_h$

832

Determining an estimate $\hat{m}$ of the message $m$ from the estimates in the vertical and horizontal dimensions

834

Triggering action

**FIGURE 19**

Europäisches
Patentamt
European
Patent Office
Office européen
des brevets

## EUROPEAN SEARCH REPORT

**Application Number**

EP 22 30 6368

### DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| A | WO 2018/204790 A1 (INTERDIGITAL PATENT HOLDINGS INC [US]) 8 November 2018 (2018-11-08) * paragraph [0090] * * figure 8 * * paragraph [0119] - paragraph [0121] * | 1-15 | INV. H04L27/00 H04L27/02 H04L27/26 H04W52/02 |
| A | WO 2020/200428 A1 (ERICSSON TELEFON AB L M [SE]) 8 October 2020 (2020-10-08) * abstract * * page 2, line 12 - line 29 * * page 3, line 25 - line 30 * * page 7, line 21 - line 32 * * page 9, line 6 - line 15 * * figure 5 * * page 10, line 4 * * figure 7 * * page 10, line 33 - page 11, line 5 * | 1-15 | |
| A | US 2018/152333 A1 (SHELLHAMMER STEPHEN JAY [US] ET AL) 31 May 2018 (2018-05-31) * abstract * * figure 16 * * figure 17 * * paragraph [0005] - paragraph [0008] * * paragraph [0056] * * paragraph [0069] - paragraph [0070] * * figure 4 * * paragraph [0081] - paragraph [0083] * * paragraph [0089] - paragraph [0090] * | 1-15 | |

TECHNICAL FIELDS SEARCHED (IPC)

H04L
H04W

-/--

The present search report has been drawn up for all claims

| Place of search | Date of completion of the search | Examiner |
|---|---|---|
| Berlin | 15 February 2023 | Douglas, Ian |

EPO FORM 1503 03.82 (P04C01)

**EUROPEAN SEARCH REPORT**

Application Number

EP 22 30 6368

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| A | WO 2018/204246 A1 (INTERDIGITAL PATENT HOLDINGS INC [US]) 8 November 2018 (2018-11-08) * figure 24 * * paragraph [0144] * * figure 25 * * paragraph [0145] * * figure 26 * * paragraph [0148] * ----- | 1-15 | |
| A | XIAOFEI WANG (INTERDIGITAL): "On the Coexistence of 802.11ax and 802.11ba Signals", IEEE DRAFT; 11-17-0659-01-00BA-ON-THE-COEXISTENCE-OF-802-11AX-AND-802-11BA-SIGNALS, IEEE-SA MENTOR, PISCATAWAY, NJ USA , vol. 802.11ba, no. 1 10 May 2017 (2017-05-10), pages 1-21, XP068115848, Retrieved from the Internet: URL:https://mentor.ieee.org/802.11/dcn/17/11-17-0659-01-00ba-on-the-coexistence-of-802-11ax-and-802-11ba-signals.pptx [retrieved on 2017-05-10] * page 2 - page 3 * * page 5 - page 8 * ----- | 1-15 | TECHNICAL FIELDS SEARCHED (IPC) |

The present search report has been drawn up for all claims

| Place of search | Date of completion of the search | Examiner |
|---|---|---|
| Berlin | 15 February 2023 | Douglas, Ian |

## ANNEX TO THE EUROPEAN SEARCH REPORT
## ON EUROPEAN PATENT APPLICATION NO.

EP 22 30 6368

This annex lists the patent family members relating to the patent documents cited in the above-mentioned European search report.
The members are as contained in the European Patent Office EDP file on
The European Patent Office is in no way liable for these particulars which are merely given for the purpose of information.

15-02-2023

| Patent document cited in search report | | Publication date | Patent family member(s) | | Publication date |
|---|---|---|---|---|---|
| WO 2018204790 | A1 | 08-11-2018 | CN | 110583000 A | 17-12-2019 |
| | | | EP | 3619901 A1 | 11-03-2020 |
| | | | KR | 20200012843 A | 05-02-2020 |
| | | | US | 2020162302 A1 | 21-05-2020 |
| | | | US | 2022109600 A1 | 07-04-2022 |
| | | | WO | 2018204790 A1 | 08-11-2018 |
| WO 2020200428 | A1 | 08-10-2020 | CN | 113647071 A | 12-11-2021 |
| | | | EP | 3949300 A1 | 09-02-2022 |
| | | | US | 2022191075 A1 | 16-06-2022 |
| | | | WO | 2020200428 A1 | 08-10-2020 |
| US 2018152333 | A1 | 31-05-2018 | US | 2018152333 A1 | 31-05-2018 |
| | | | WO | 2018098471 A1 | 31-05-2018 |
| WO 2018204246 | A1 | 08-11-2018 | AU | 2018261601 A1 | 21-11-2019 |
| | | | AU | 2021203861 A1 | 08-07-2021 |
| | | | CN | 110603794 A | 20-12-2019 |
| | | | CN | 115051897 A | 13-09-2022 |
| | | | EP | 3619900 A1 | 11-03-2020 |
| | | | JP | 2020520583 A | 09-07-2020 |
| | | | KR | 20200012841 A | 05-02-2020 |
| | | | TW | 201843954 A | 16-12-2018 |
| | | | US | 2020059342 A1 | 20-02-2020 |
| | | | US | 2021160033 A1 | 27-05-2021 |
| | | | WO | 2018204246 A1 | 08-11-2018 |

EPO FORM P0459

For more details about this annex : see Official Journal of the European Patent Office, No. 12/82

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- EP 3955482 A1

**Non-patent literature cited in the description**

- **J. G. PROAKIS ; S. M.** Digital Communications. Mc-Graw-hill, 2001, vol. 4